# EUROPEAN PATENT APPLICATION

(11) **EP 4 280 696 A1**
(43) Date of publication of application: **22.11.2023**
(21) Application number: 22752194.5
(22) Date of filing: 29.01.2022
(51) Int. Cl.: H04W 48/08, H04W 36/34, H04W 48/16

(54) **COMMUNICATION METHOD AND APPARATUS**

(30) Priority: 10.02.2021 CN 202110185619
(71) Applicant: Huawei Technologies Co., Ltd., Shenzhen, Guangdong 518129 (CN)
(72) Inventor: CHANG, Junren, Shenzhen, Guangdong 518129 (CN); LIU, Jianghua, Shenzhen, Guangdong 518129 (CN); ZHANG, Zhiyong, Shenzhen, Guangdong 518129 (CN); WANG, Lingping, Shenzhen, Guangdong 518129 (CN); FENG, Shulan, Shenzhen, Guangdong 518129 (CN)
(74) Representative: Goddar, Heinz J.
(86) International application number: PCT/CN2022/075008
(87) International publication number: WO 2022/171033

(57) **Abstract**

This application provides a communication method and apparatus, to improve service continuity of a terminal. The method is applied to a terminal device. The terminal device stores a first parameter, and the first parameter is a parameter used by the terminal device in a first mode. The method includes: The terminal device fails in accessing a network device, or fails in registering with the network device, or is not capable of camping on a network of the network device. The terminal device performs access to the network device in the first mode by using the first parameter.

## Description

This application claims priority to Chinese Patent Application No. 202110185619.4, filed with the China National Intellectual Property Administration on February 10, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

At present, mobile communication networks become increasingly complex. A terminal may establish a connection to a network side to execute a service. However, in some cases, the terminal may fail in accessing the network or registering with the network. In some cases, an access failure or a registration failure of the terminal is caused by incompatibility with the network side. For example, if a protocol version of the terminal is inconsistent with that of the network side, compatibility problems may occur. In some cases, the access failure or registration failure of the terminal is caused by a failure of the network or the terminal.

That the terminal fails in accessing or registering due to the compatibility problem is used as an example. In an Internet of Things (Internet of things, IoT) scenario, there are a large quantity of terminals. If the compatibility problem occurs in the terminal or the network in the scenario, a plurality of terminals may fail in accessing the network, and the service fails. It can be seen that how to ensure service execution of the terminal is of great significance. Currently, a solution that can ensure service continuity of the terminal needs to be urgently provided.

### SUMMARY

Embodiments of this application provide a communication method and apparatus, to improve service continuity of a terminal in a scenario such as a compatibility problem.

To achieve the foregoing objectives, the following technical solutions are used in this application.

According to a first aspect, a communication method is provided. The communication method may be performed by a terminal device or an assembly (such as a chip system of the terminal device) that can be used in matching with the terminal device to implement a function of the terminal device. For example, the method is applied to the terminal device, and the method includes the following.

The terminal device fails in accessing a network device, or fails in registering with the network device, or is not capable of camping on a network of the network device, and the terminal device performs access to the network device in the first mode by using the first parameter.

Compared with the conventional technologies, the terminal device needs to read some parameters in an MIB, some parameters in a SIB, some parameters in a related message in an RRC connection establishment process, and some parameters in a related message in an initial registration process to perform network access, which causes a relatively high probability that the terminal device fails in accessing the network. In this embodiment of this application, considering that the terminal device may fail in obtaining all parameters related to the network access from the network device, or the terminal device cannot successfully parse some parameters although the terminal device can receive some parameters from the network device, at least some of the parameters required by the terminal device to access the network may be locally fixed. In this way, according to one aspect, this can reduce dependency on the network device when the terminal device obtains a parameter required for accessing a network, and improve a probability of successfully accessing the network by the terminal device. According to another aspect, the terminal device accesses the network by using some fixed parameters, so that some interaction signaling such as connection establishment or initial registration between the terminal device and the network device can be omitted, so that signaling overheads can be reduced, and a network capacity can be improved.

In a possible design, the method further includes: sending, by the terminal device, first indication information to the network device, where the first indication information indicates the terminal device to perform access to the network device in the first mode. In this way, the network device can learn that the terminal device is in the first mode, so that the network device also uses the same first mode to communicate with the terminal device.

In a possible design, the first parameter includes at least one of the following parameters: a parameter related to performing uplink synchronization and downlink synchronization, a parameter related to access stratum, a parameter related to non-access stratum security, a parameter related to registration, and a parameter related to a data service, a voice service, or a short message service.

In a possible design, the parameter related to performing uplink synchronization and downlink synchronization includes at least one of the following parameters: a configuration parameter related to cell selection, a configuration parameter of an initial bandwidth part initial BWP or an access frequency band resource, a parameter related to a control resource set 0, a configuration parameter used for search control of paging and random access, a configuration parameter of a physical downlink control channel PDCCH and a physical downlink shared channel PDSCH, a configuration parameter of a random access channel RACH resource, a configuration parameter of a physical uplink control channel PUCCH resource, a power control parameter, a time division duplex TDD ratio parameter, and a subcarrier spacing; and/or
the parameter related to the access stratum includes at least one of the following parameters: a configuration parameter of a signaling radio bearer SRB and a data radio bearer DRB, a media access control MAC layer parameter, a radio link control RLC layer parameter, a packet data convergence protocol PDCP layer parameter, a service data adaptation protocol SDAP layer parameter, a radio resource control RRC layer parameter, a physical layer parameter, a logical channel configuration parameter, an RLC sequence number length, a PDCP sequence number length, a quality of service QoS parameter, and a security algorithm configuration parameter; and/or
the parameter related to the non-access stratum security includes a security-related parameter, and the security-related parameter includes: a security key set identifier and/or a security algorithm (in other words, the security-related parameter includes at least one of the security key set identifier and the security algorithm); and/or
the parameter related to performing registration includes: a registration area identifier and/or a terminal identifier; and/or
the parameter related to performing the data service, the voice service, or the short message service includes at least one of the following parameters: a rate of the data service, a rate of the voice service, a rate of the short message service, and a QoS parameter; and a resource of the data service, a resource of the voice service, and a resource of the short message service.

In a possible design, the first parameter is continuously reserved when the terminal device communicates with the network device in a non-first mode.

In a possible design, a rate of first data transmitted by the terminal device is less than or equal to a first rate threshold.

In a possible design, when the first data transmitted by the terminal device is voice service data or short message service data, the rate of the first data is less than or equal to a second rate threshold; or
when the first data transmitted by the terminal device is non-voice service data or non-short message service data, the rate of the first data is less than or equal to a third rate threshold.

In a possible design, a data volume of the first data transmitted by the terminal device is less than or equal to a first threshold; and/or a quantity of transmission times of the first data is less than or equal to a second threshold.

In a possible design, a quantity of times that the terminal device enters the first mode is less than or equal to a first quantity threshold; or a quantity of times that the terminal device enters the first mode is less than or equal to a second quantity threshold; or a quantity of access times in the first mode that the terminal device performs service transmission is less than or equal to a third quantity threshold.

In a possible design, that the terminal device fails in accessing the network device includes: the terminal device has no accessible first network, or a quantity of RRC connection setup failures of the terminal device reaches L, or a quantity of RRC connection reestablishment failures of the terminal device reaches M; and/or
that the terminal device fails in registering with the network device includes: a quantity of registration failures reaches N, where
L, M, and N are positive integers.

In a possible design, the method further includes: sending, by the terminal device, second indication information, where the second indication information indicates to exit the first mode.

In a possible design, the method further includes:
receiving, by the terminal device, system information of the network device, and exiting, by the terminal device, the first mode when the system information is correctly parsed; or
exiting, by the terminal device, the first mode if the terminal device reselects another network or another cell.

If the terminal device can receive and correctly parse the system information, or the terminal device reselects another network or cell, it indicates that the terminal device can camp on or access the network in the normal mode. In this case, the terminal device may exit the first mode, so as to communicate with the network device in the normal mode.

In a possible design, the method further includes:
detecting, by the terminal device, whether the terminal device accesses the network device in a second mode, and exiting the first mode if the terminal device accesses the network device in the second mode, where the second mode is different from the first mode, or
receiving, by the terminal device, third indication information from the network device, where the third indication information indicates the terminal device to exit the first mode.

According to a second aspect, a communication method is provided, applied to a network device, where the network device stores a first parameter, the first parameter is a parameter used by the network device in a first mode, and the method includes:
receiving, by the network device, first indication information from a terminal device, where the first indication information indicates the terminal device to perform access to the network device in the first mode; and
communicating, by the network device, with the terminal device in the first mode by using the first parameter.

In a possible design, the first parameter includes at least one of the following parameters: a parameter related to performing uplink synchronization and downlink synchronization, a parameter related to access stratum, a parameter related to non-access stratum security, a parameter related to registration, and a parameter related to a data service, a voice service, or a short message service.

In a possible design, the parameter related to performing uplink synchronization and downlink synchronization includes at least one of the following parameters: a configuration parameter related to cell selection, a configuration parameter of an initial bandwidth part initial BWP or an access frequency band resource, a parameter related to a control resource set 0, a configuration parameter used for search control of paging and random access, a configuration parameter of a physical downlink control channel PDCCH and a physical downlink shared channel PDSCH, a configuration parameter of a random access channel RACH resource, a configuration parameter of a physical uplink control channel PUCCH resource, a power control parameter, a time division duplex TDD ratio parameter, and a subcarrier spacing; and/or
the parameter related to the access stratum includes at least one of the following parameters: a configuration parameter of a signaling radio bearer SRB and a data radio bearer DRB, a media access control MAC layer parameter, a radio link control RLC layer parameter, a packet data convergence protocol PDCP layer parameter, a service data adaptation protocol SDAP layer parameter, a radio resource control RRC layer parameter, a physical layer parameter, a logical channel configuration parameter, an RLC sequence number length, a PDCP sequence number length, a quality of service QoS parameter, and a security algorithm configuration parameter; and/or
the parameter related to the non-access stratum security includes a security-related parameter, and the security-related parameter includes: a security key set identifier and/or a security algorithm; and/or
the parameter related to performing registration includes: a registration area identifier and/or a terminal identifier; and/or
the parameter related to performing the data service, the voice service, or the short message service includes at least one of the following parameters: a rate of the data service, a rate of the voice service, a rate of the short message service, and a QoS parameter; and a resource of the data service, a resource of the voice service, and a resource of the short message service.

In a possible design, the method further includes: sending, by the network device, third indication information to the terminal device, where the third indication information indicates the terminal device to exit the first mode.

According to a third aspect, a communication apparatus is provided, where the apparatus stores a first parameter, and the first parameter is a parameter used by the apparatus in a first mode. The communication apparatus is configured to perform the communication method in any one of the first aspect or the possible implementations of the first aspect. Specifically, the communication apparatus may include modules configured to perform the communication method in any one of the first aspect or the possible implementations of the first aspect.

According to a fourth aspect, a communication apparatus is provided, where the apparatus stores a first parameter, and the first parameter is a parameter used by the apparatus in a first mode. The communication apparatus is configured to perform the communication method in any one of the second aspect or the possible implementations of the second aspect. Specifically, the communication apparatus may include a module configured to perform the communication method in any one of the second aspect or the possible implementations of the second aspect.

According to a fifth aspect, a communication apparatus is provided, where the communication apparatus includes: a processor, where the processor is coupled to a memory, and a memory, configured to store a computer program. The processor is configured to execute the computer program stored in the memory, so that the communication apparatus performs the communication method according to any one of the possible implementations of the first aspect and the second aspect.

According to a sixth aspect, a communication system is provided, including the terminal device in any one of the foregoing aspects and the network device in any one of the foregoing aspects.

According to a seventh aspect, a computer-readable storage medium is provided. The computer-readable storage medium includes a computer program or instructions. When the computer program or the instruction runs on a computer, the computer is enabled to perform the method in any one of the first aspect and the possible implementations of the second aspect.

According to an eighth aspect, a computer program product is provided, which includes a computer program or instructions. When the computer program or the instruction runs on a computer, the computer is enabled to perform the method in any possible implementation of the first aspect or the second aspect.

### BRIEF DESCRIPTION OF THE DRAWINGS

FIG. 1 is a schematic diagram an architecture of a communication system according to an embodiment of this application;
FIG. 2 is a schematic diagram of a structure of a communication apparatus according to an embodiment of this application;
FIG. 3 to FIG. 15 are schematic flowcharts of a communication method according to an embodiment of this application; and
FIG. 16 to FIG. 20 are schematic diagrams of a structure of a communication apparatus according to an embodiment of this application.

### DESCRIPTION OF EMBODIMENTS

First, some related technologies in embodiments of this application are described.

### 1. Network access

A terminal device accesses a network by performing network access to perform a service. Currently, the terminal device needs to obtain some parameters in a master information block (master information block, MIB), some parameters in a system information block (system information block, SIB) 1, a message related to an RRC connection setup process, and a message related to an initial registration process, to perform the network access.

A message that carries the parameters required for accessing the network is usually delivered by a network device to the terminal device. It can be learned that whether the terminal device can obtain valid parameters required for accessing the network strongly depends on the network device. Therefore, in some cases, the terminal device may fail in obtaining all parameters by using the network device.

For example, in some cases, when the network device is faulty, and the terminal device fails in obtaining SIB1 information of a cell, or cannot obtain complete SIB1 information of the cell, the terminal device cannot obtain a related parameter in the SIB1. As a result, the terminal device cannot obtain all parameters required for accessing the network, and the terminal device cannot access the cell. In this way, the terminal cannot perform the service by using the cell.

### 2. Compatibility problem

In an actual problem handling process, terminal vendors often find that a plurality of access or registration failures are caused by a compatibility problem, and some problems may even occur repeatedly on different base stations for a long time period. However, before the compatibility problems are correctly located, it is not possible to predict whether the problem is caused by a communication compatibility problem of a network. Therefore, efficiency of solving the problems is very low.

In addition, in a scenario such as future-oriented IoT, a quantity of terminals is large. Therefore, when the compatibility problem occurs in a batch of terminal products, a plurality of terminals in the batch cannot access the network.

There are a plurality of causes for the compatibility problem. The terminal may fail in accessing the network due to network upgrade, inconsistency between the network and a protocol or a version of the terminal, or the like. For example, when a long term evolution (long term evolution, LTE) network is upgraded to support a new radio (new radio, NR) function, SIB24 related information needs to be extended and added to system information. However, when the SIB24 is unilaterally upgraded and extended in the LTE network, a problem that a large quantity of terminals cannot access the Internet in the upgraded LTE network occurs. Such kind of problem is a typical compatibility problem. In this scenario, the terminal is not upgraded. Therefore, when a related message is parsed, the related message may not be identified, or the related message is identified as an abnormal message. As a result, a case such as a message parsing error or a message parsing failure occurs, and the terminal cannot normally access the network for service transmission.

For example, after a core network is upgraded, the network side sends a registration accept (Registration Accept) message to the terminal. When parsing the registration accept message, the terminal determines that the registration accept message is an abnormal byte. As a result, registration fails, and network access fails. In this example, the terminal cannot be correctly compatible with the registration accept message after the core network is upgraded. Therefore, a problem of parsing the compatibility message fails occurs. For another example, when the core network is upgraded, the terminal cannot correctly parse the SIB1 delivered by the network side, or cannot obtain a complete SIB1, which also causes an access failure of the terminal.

Alternatively, the compatibility problem may also be that the network side cannot perform correct compatibility processing on the capability information sent by the terminal. Consequently, a parsing failure is caused and no response is executed. For example, capability information sent by the terminal indicates that a protocol version of the terminal is version 1, and the network side does not correctly parse the capability information. As a result, the network side may subsequently deliver a message of version 2 to the terminal, and the terminal fails in parsing the message because the terminal is incompatible with the message of version 2.

When the compatibility problem occurs, a risk of the terminal is higher. The possible causes are as follows.
1. Regardless of which party (the network side or the terminal) causes the compatibility problem, an initial access of the terminal is mainly affected and the terminal cannot access the network. The compatibility problem in camping and access phases is more likely to cause a large quantity of terminals (for example, millions of terminals or more) fails in accessing the network.
2. After the compatibility problem occurs, the terminal usually attempts to re-establish a connection, a re-registration, or the like. However, the CPE or IoT device cannot access the network even after a plurality of attempts due to the special environment (possibly poor signal strength) or limited capability (for example, low transmit power). As a result, services of the terminal are interrupted. In addition, because the terminal cannot access the network, the terminal cannot subsequently perform software upgrade or version upgrade, and the current problem cannot be rectified. As a result, the terminal may not normally access the network for a long time.
3. Upgrade the network side or terminal to enable the terminal to access the network.

The conventional technologies provide a manner for solving the compatibility problem. The foregoing SIB24 is still used as an example for description. The conventional technologies are to modify the SIBx information following the extension symbol "..." in a SystemInformationBlockType1 message (SystemInformationBlockType1 message). This modification requires that both the network side and the current normal terminal need to be upgraded. That is, in the conventional technologies, taking the terminal has the compatibility problem for example, the terminal needs to be upgraded first, and only an upgraded terminal can perform the network access. As a result, a service of the terminal is delayed, and service continuity of the terminal is limited.

It can be learned that service continuity of the terminal cannot be improved in the conventional technologies. Therefore, an embodiment of this application provides a communication method. The terminal device and the network device have corresponding security parameters fixed, and the terminal device may perform access to the network device by using the security parameters. According to one aspect, dependency on the network device when the terminal device obtains the parameter required for accessing the network can be reduced, a probability of successfully accessing the network by the terminal device is increased, and the service continuity of the terminal device is improved. According to another aspect, the terminal device accesses the network by using some fixed parameters, so that some interaction signaling such as connection establishment or initial registration between the terminal device and the network device can be omitted, so that signaling overheads can be reduced, and a network capacity can be improved.

The following describes technical solutions of this application with reference to the accompanying drawings.

The technical solutions in embodiments of this application may be applied to various communication systems, for example, a wireless fidelity (wireless fidelity, Wi-Fi) system, a vehicle to everything (vehicle to everything, V2X) communication system, and a device-to-device (device-to-device, D2D) communication system, an Internet of Vehicles communication system, a 3rd generation (3rd generation) mobile communication system, a 4th generation (4th generation, 4G) mobile communication system, such as an LTE system, a worldwide interoperability for microwave access (worldwide interoperability for microwave access, WiMAX) communication system, a 5th generation (5th generation, 5G) mobile communication system, such as an NR system, and a future communication system, such as a sixth generation (6th generation, 6G) mobile communication system.

The technical solutions in embodiments of this application may be applied to a plurality of application scenarios, for example, a terminal fault, a compatibility problem such as a protocol or a version, a network fault, a compatibility problem such as a protocol, or another scenario. In these scenarios, the terminal generally cannot access or camp on the network in a normal mode.

The normal mode refers to a communication mode already supported in a current standard of a 3rd generation partnership project (3rd generation partnership project, 3GPP), and includes that the terminal camps on a currently available cell in an idle (idle) or inactive (inactive) state, and performs various operations such as receiving paging messages, cell selection, cell reselection, system information reception, and measurement. The normal mode also includes various operations such as service data transmission, cell switch, paging receiving, and broadcast receiving performed by the terminal in a connected mode (connected mode).

In the following embodiments, the technical solutions in embodiments of this application are mainly described by using an example in which the compatibility problem occurs on the network side or the terminal, and the terminal cannot access or camp on the network in the normal mode. In this embodiment of this application, accessing the network in the normal mode may also be referred to as accessing the network in a normal connection establishment manner.

This application presents various aspects, embodiments, or features around a system that may include a plurality of devices, assembles, modules, and the like. It should be understood and appreciated that each system may include another device, assembly, module, and the like, and/or may not include all devices, assembles, modules, and the like discussed with reference to the accompanying drawings. In addition, combinations of these solutions can be used.

In addition, in this embodiment of this application, words such as "exemplarily" and "for example" are used for representing an example, an instance, or a description. Any embodiment or design solution described as an "example" in this application should not be interpreted as being more preferred or advantageous than other embodiments or design solutions. Rather, the use of the example is intended to present the concept in a concrete manner.

In this embodiment of this application, "information (information)", "signal (signal)", "message (message)", "channel (channel)", and "signaling (signaling)" may sometimes be mixed. It should be noted that when the difference is not emphasized, the meaning to be expressed is consistent. Terms "of (of)" and "corresponding (corresponding, related)" may be interchangeably used sometimes. It should be noted that meanings expressed by the terms are consistent when differences of the terms are not emphasized.

In this embodiment of this application, sometimes a subscript such as W1 may be incorrectly used as a non-subscript form such as W1. When a difference between the subscript and W1 is not emphasized, meanings to be expressed in the subscript and W1 are consistent.

In this embodiment of this application, that a device A sends a message to a device B may be understood as that the device A directly sends a message to the device B, or the device A may send a message to the device B by using an intermediate device. The number and type of intermediate devices are not limited.

The network architecture and the service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

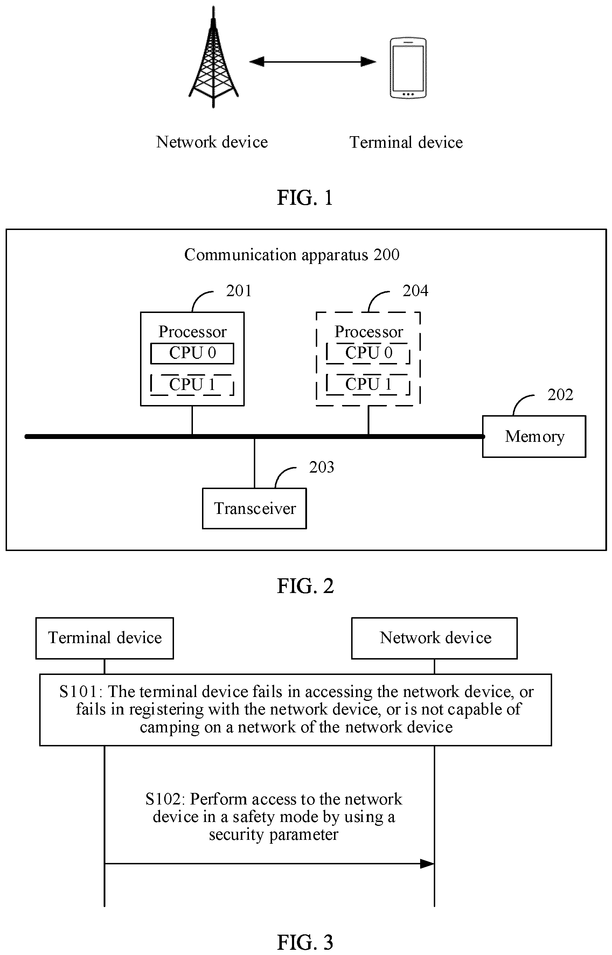

FIG. 1 is a schematic diagram of an architecture of a communication system to which a communication method is applicable according to an embodiment of this application. For ease of understanding of embodiments of this application, a communication system applicable to embodiments of this application is first described in detail by using the communication system shown in FIG. 1 as an example. It should be noted that the solutions in embodiments of this application may be further applied to another mobile communication system, and a corresponding name may alternatively be replaced with a name of a corresponding function in another mobile communication system.

As shown in FIG. 1, the communication system includes a network device and a terminal device.

The network device may include an access network device (FIG. 1 shows a case in which the network device is a base station as an example). The access network device is a device that is located on a network side of the communication system and has a wireless transceiver function, or a chip (system) or another component or assembly that may be disposed in the device. The access network device includes but is not limited to an access point (access point, AP) in a wireless fidelity (wireless fidelity, Wi-Fi) system, such as a home gateway, a router, a server, a switch, or a bridge, an evolved NodeB (evolved NodeB, eNB), a radio network controller (radio network controller, RNC), a NodeB (NodeB, NB), a base station controller (BSC), a base transceiver station (base transceiver station, BTS), a home base station (such as home evolved NodeB, or home NodeB, HNB), a baseband unit (baseband unit, BBU), a wireless relay node, a wireless backhaul node, a transmission and reception point (transmission and reception point, TRP or transmission point, TP), or the like; may be a 5G, for example, a gNB in a new radio (new radio, NR) system, or a transmission and reception point (TRP or TP), or one or one group (including a plurality of antenna panels) of antenna panels of a base station in the 5G system; or may be a network node forming a gNB or a transmission point, for example, a baseband unit (BBU), a distributed unit (distributed unit, DU), a road side unit (road side unit, RSU) having a base station function, or the like.

The network device may further include a core network element. The core network element is a device that is located on the network side of the communication system and provides a network service for the terminal device, or a chip (system) or another component or assembly that may be disposed in the device. The core network element includes but is not limited to an access management network element. The access management network element is mainly used for mobility management and access management, and is responsible for transferring a user policy between a terminal device and a policy control function (policy control function, PCF) network element. The access management network element may be configured to implement a mobility management entity (mobility management entity, MME) function other than session management, such as lawful interception and access authorization/authentication. In the 5G communication system, the access management network element may be an access and mobility management function (access and mobility management function, AMF) network element. In a future communication system, the access management network element may still be an AMF network element, or may have another name, which is not limited in this application.

The terminal device is a device that accesses the communication system and has a wireless transceiver function, or a chip or a chip system that may be disposed in the device. The terminal device may also be referred to as a user apparatus, an access terminal, a subscriber unit, a subscriber station, a mobile station, a remote station, a remote terminal, a mobile device, a user terminal, a terminal device, a wireless terminal device, a user agent, or a user apparatus. The terminal device in embodiments of this application may be a mobile phone (mobile phone), a tablet (Pad), a computer that has a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU that has a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement the communication method in this application by using the vehicle-mounted module, the vehicle-mounted assembly, the vehicle-mounted component, the vehicle-mounted chip, or the vehicle-mounted unit that is built in the vehicle. Alternatively, the terminal device may be another terminal device such as a customer premise equipment (customer premise equipment, CPE) or an IoT. In the following embodiments of this application, a terminal device is used as an example for description.

It should be understood that FIG. 1 is merely a simplified schematic diagram of an example for ease of understanding. The communication system may further include another network device and/or another terminal device that are/is not shown in FIG. 1.

FIG. 2 is a schematic diagram of a structure of a communication apparatus that can be configured to perform a communication method according to an embodiment of this application. The communication apparatus may be a terminal device, or may be a chip (system) or another component or assembly that can be used in the terminal device. Alternatively, the communication apparatus may be a network device, or may be a chip (system) or another component or assembly that can be used in the network device.

As shown in FIG. 2, the communication apparatus 200 may include a processor 201. Optionally, the communication apparatus 200 may further include a transceiver 203 and a memory 202. The processor 201 is coupled to the memory 202 and the transceiver 203, for example, may be connected through a communication bus.

The following describes components of the communication apparatus 200 in detail with reference to FIG. 2.

The processor 201 is a control center of the communication apparatus 200, and may be a processor, or may be a collective name of a plurality of processing elements. For example, the processor 201 is one or more central processing units (central processing unit, CPU), or may be an application-specific integrated circuit (application-specific integrated circuit, ASIC), or is configured as one or more integrated circuits that implement embodiments of this application, such as one or more digital signal processors (digital signal processor, DSP), or one or more field programmable gate arrays (field programmable gate array, FPGA).

The processor 201 may execute various functions of the communication apparatus 200 by running or executing a software program stored in the memory 202 and invoking data stored in the memory 202.

In specific implementation, in an embodiment, the processor 201 may include one or more CPUs, for example, a CPU 0 and a CPU 1 shown in FIG. 2.

In specific implementation, in an embodiment, the communication apparatus 200 may alternatively include a plurality of processors, for example, the processor 201 and the processor 204 shown in FIG. 2. Each of the processors may be a single-core processor (single-CPU) or may be a multi-core processor (multi-CPU). The processor herein may be one or more devices, circuits, and/or processing cores configured to process data (for example, a computer program instruction).

The memory 202 may be a read-only memory (read-only memory, ROM) or another type of static storage device that can store static information and instructions, or a random access memory (random access memory, RAM) or another type of dynamic storage device that can store information and instructions. The memory may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible by a computer, but is not limited thereto. The memory 202 may be integrated with the processor 201, or may exist independently, and is coupled to the processor 201 by using an input/output port (not shown in FIG. 2) of the communication apparatus 200, which is not specifically limited in this embodiment of this application.

The memory 202 is configured to store a software program for executing the solutions of this application, and the processor 201 controls execution of the software program. For the foregoing specific implementation, refer to the following method embodiment, and details are not described herein again.

The transceiver 203 is configured to communicate with another communication apparatus. For example, the communication apparatus 200 is the terminal device, and the transceiver 203 may be configured to communicate with the network device. For another example, the communication apparatus 200 is the network device, and the transceiver 203 may be configured to communicate with another network device. In addition, the transceiver 203 may include a receiver and a transmitter (not separately shown in FIG. 2). The receiver is configured to implement a receiving function, and the transmitter is configured to implement a sending function. The transceiver 203 may be integrated with the processor 201, or may exist independently, and is coupled to the processor 201 by using an input/output port (not shown in FIG. 2) of the communication apparatus 200, which is not specifically limited in this embodiment of this application.

It should be noted that a structure of the communication apparatus 200 shown in FIG. 2 does not constitute a limitation on the communication apparatus. An actual communication apparatus may include more or fewer components than those shown in the figure, or combine or split some components, or have different component arrangements.

The following describes in detail a communication method provided in embodiments of this application with reference to FIG. 3 to FIG. 6.

An embodiment of this application provides a communication method. As shown in FIG. 3, the method includes the following steps.

S101: A terminal device fails in accessing a network device, or fails in registering with the network device, or is not capable of camping on a network of the network device.

The network device may be, for example, but is not limited to, an access network device such as a base station.

In this embodiment of this application, that the terminal device fails in accessing the network device or is not capable of camping on the network device means that the terminal device cannot access or camp on a network (for example, a cell) within coverage of the network device in the normal mode, or is not capable of camping on a network within coverage of the network device in the normal mode. The normal mode (that is, the second mode) may be a communication mode already supported in a current 3GPP standard, or may be a mode other than the safety mode introduced in this embodiment of this application.

Optionally, when a compatibility problem occurs on the network side or the terminal, if one or more of the following conditions are met, it indicates that the terminal device fails in accessing the network device.

Condition 1a: The terminal device has no accessible first network. For example, there is no effective communication channel. For another example, there is no other available radio access technology (radio access technology, RAT) and no another available (available) cell.

That the first network is a cell is used as an example. If the terminal device performs cell selection or cell reselection based on a cell selection or cell reselection criterion, but does not find the available cell, the terminal device determines that no valid cell is currently available. For example, the terminal device first selects a cell of a current RAT, for example, an NR cell. If a valid NR cell cannot be selected (for example, cannot be accessed), the terminal device attempts to start a selection operation of another RAT, for example, LTE or 3G (Herein, it is assumed that the terminal device has an LTE or 3G communication capability) to select the LTE or the 3G cell. If the terminal device still cannot find a suitable cell after attempting cell selection and reselection of the RAT supported by the terminal device, the terminal device determines that no valid cell is available currently. This means that when performing random access or registration, the terminal device cannot access the cell in the normal mode, or fails in accessing the cell in the normal mode.

Condition 2a: A quantity of radio resource control RRC connection setup failures of the terminal device reach L, or a quantity of RRC connection reestablishment failures reaches M, where both Land M are positive integers.

The condition 2a may also be understood as: Within a preset time, the terminal device performs the RRC connection reestablishment for M times, and all the M RRC connection reestablishments fail; or within a preset time, the terminal device performs the RRC connection establishment for L times, and all the L connection establishment times fail. The preset time may be a predefined time length (for example, preconfigured in the terminal device before delivery), or a time length obtained by the terminal device from the network device. L and M may be a protocol preset quantity of times, for example, predefined by a standard, or the terminal device obtains L and M from the network device.

Alternatively, another condition may be used for determining whether the terminal device fails in accessing the network device or whether the terminal device can access the network device. A specific determining condition is not limited in this embodiment of this application.

That the terminal device determines that the registration fails may be that a quantity of registration failures of the terminal device reaches N (N is a positive integer).

It should be noted that the terminal device cannot access the network devices, which may be caused by different reasons. For example, the network device prohibits access of the terminal device, or although the network device allows access of the terminal device, versions of the terminal device or the network device may be incompatible. The terminal device is unaware of the specific cause of the access failure.

Optionally, if any one of the following conditions is met, it indicates that the terminal device cannot camp on the network device.

Condition 1b: The terminal device cannot receive system information from the network device.

Condition 2b: The terminal device cannot parse the system information from the network device. That is, in this case, the terminal device may receive the system information, but cannot correctly parse the system information due to a reason such as incompatibility between the system information formats of the terminal and the network side.

Alternatively, another condition may be used for determining whether the terminal device can camp on the network device. A specific determining condition is not limited in this embodiment of this application.

It should be noted that the failure of the terminal device to access the network device or the failure of camping on the network device may be caused by a fault or compatibility problem of the terminal device itself, or may be caused by a fault or compatibility problem of the network device.

S102: The terminal device performs access to the network device in a safety mode by using the security parameter.

In this embodiment of this application, a safety mode (safety mode) is introduced, and the safety mode (namely, the first mode) may be defined as: Network access is performed when the terminal device or the network device fails in accessing or registering with the network in the normal mode due to compatibility or fault. Optionally, in a case in which the terminal device fails in accessing the network device or is not capable of camping on the network device, that is, in a case in which the terminal device cannot access the network in the normal mode or camp on the network side, the terminal device may enter the safety mode, and access the network in the safety mode.

The safety mode may also be referred to as a safety channel, a compatibility mode, a compatible channel, a default mode, a default channel, an emergency mode, an emergency channel, or the like, or may have another name. A specific name of the mode is not limited in this embodiment of this application. In this embodiment of this application, the safety mode is mainly used as an example for description. However, the foregoing descriptions are equivalent and can be replaced with each other, and are uniformly described herein.

It should be noted that the safety mode (safety mode) defined in this embodiment of this application and the security mode (security mode) in the conventional technologies are different concepts. Description is provided herein to prevent a reader from confusing the two concepts.

A difference between the safety mode defined in this embodiment of this application and the normal mode mainly lies in that the security parameter is used for using the safety mode (including starting (or entering) the safety mode). Optionally, the terminal device may switch from the safety mode to the normal mode. A specific switching manner is not limited in this embodiment of this application.

That the terminal device accesses the network in the safety mode may be that the terminal device first camps on the network side in the safety mode. In this case, a corresponding state of the terminal device is an idle state or an inactive state. If the terminal device initiates a random access procedure after camping on the network side in the safety mode, it is said that the terminal device accesses the network side, and a corresponding state of the terminal device is a connected state. It may be understood that, when the terminal device has no service, the terminal device may choose to camp on the network, or when the terminal device has a service, the terminal device may choose to access the network to execute the service.

In this embodiment of this application, to implement the foregoing safety mode and operations performed by the terminal device by using the safety mode, a set of security parameters (that is, a first parameter) used by an application in the safety mode, or a parameter corresponding to the safety mode, is introduced. Specifically, the security parameter is a parameter that needs to be used by the terminal device and/or the network device when a problem such as compatibility or fault occurs on the terminal device or the network device, and the terminal device cannot access or register with the network in a normal mode.

Optionally, the security parameter includes a parameter that can be used by the terminal device to camp on the network in the safety mode, a parameter that can be used by the terminal device to initially access or register with the network in the safety mode, and a parameter that can be used by the terminal device to establish a bearer in the safety mode. Optionally, the security parameter may further include a configuration parameter for receiving, by the terminal device, a network downlink message, for example, a paging message. Optionally, the security parameter further includes a parameter that can be used for cell reselection. Alternatively, parameters of another function are further included, and are not exhaustively described in this embodiment of this application.

Optionally, the security parameter includes but is not limited to one or more of the following parameters: a physical layer parameter, a medium access control (medium access control, MAC) layer parameter, a radio link control (radio link control, RLC) layer parameter, a packet data convergence protocol (packet data convergence protocol, PDCP) layer parameter, a service data adaptation protocol (service data adaptation protocol, SDAP) layer parameter, a radio resource control (radio resource control, RRC) layer parameter, a non-access stratum (Non-access stratum, NAS) parameter, an internet protocol multimedia subsystem (internet protocol multimedia subsystem, IMS) related parameter, a paging-message-related parameter, a physical downlink control channel (physical downlink control channel, PDCCH) related parameter, a system-information-related parameter, and a bearer-related parameter.

The bearer-related parameter is a parameter that may be used by the terminal device to establish a bearer in the safety mode.

For example, the bearer-related parameter includes but is not limited to at least one of the following: a packet data unit session (packet data unit session, PDU session), a QoS parameter, a data radio bearer (data radio bearer, DRB), an evolved packet system (evolved packet system, EPS) bearer, a logical channel, and a QoS level, an evolved packet system radio access bearer (eps radio access bearer), a data rate, a delivery mode, a security-related parameter, key algorithm information, a sequence number that needs to be used, and sequence number length information. The delivery mode, for example, is not limited to an acknowledgment mode (acknowledgement mode, AM) mode, an un-acknowledgement mode (un-acknowledgement mode, UM) mode, or a (transparent mode, TM) mode. The bearer-related parameter may include a parameter configured for the terminal device in a case of normal communication.

In this embodiment of this application, the security parameter may be classified into one or more layers. For example, a security parameter is divided into five layers (specific layers may be divided according to an actual application), and a parameter of a first layer may be used for uplink synchronization and downlink synchronization. A parameter at a second layer is a parameter required by the terminal device to establish an RRC connection to the network device (for example, the base station). A parameter at a third layer is a parameter related to non-access stratum security. A parameter at a fourth layer is a registration-related parameter. A parameter of a fifth layer is a parameter required for the data service, the voice service, or the short message service with limited rates in the safety mode.

Security parameters can be classified into layers based on the stages of the network access process. Each level parameter corresponds to one stage.

The following describes the parameters of each layer.

The parameter of the first layer, that is, a necessary parameter for the downlink synchronization and the uplink synchronization. These parameters are classified into parameters that may be fixed in the terminal device and/or the network device. The fixed parameter in the parameters at the first level includes at least one of the following parameters.
1. A configuration parameter related to the cell selection in the safety mode, including q-RxLevMin, which represents a minimum receive level (Rx level (dBm)) required by the terminal device in the cell.
2. Configuration of a specific initial BWP (initial BWP) or access frequency band resource in the safety mode. Optionally, the initial BWP bandwidth in the safety mode is less than the initial BWP bandwidth in the normal mode. Optionally, the initial BWP in safety mode is within the bandwidth range of the initial BWP in the normal mode.
3. An extended circular prefix that is not applicable to the terminal in the safety mode.
4. A parameter related to the control resource set 0 (CORESET#0) in the safety mode, where the parameter may be used in a process in which the terminal device receives a paging message or initiates random access in the safety mode.
5. Configuration information of search control for paging and random access in the safety mode.
6. A time interval (for example, a slot interval) between a PDCCH and a physical downlink shared channel (physical downlink shared channel, PDSCH) in the safety mode, and a mapping manner between the PDCCH and the PDSCH, and one or more parameters of a time domain start location (a start symbol) of the PDCCH and a time domain start location (for example, a start symbol) of the PDSCH.
7. A random access channel (random access channel, RACH) resource configuration in the safety mode.

Optionally, the RACH resource in the safety mode is different from the RACH resource in the normal mode. Optionally, the RACH resource in the safety mode is a subset of the RACH resource in the normal mode. The RACH resource includes a preamble (preamble) resource and a physical random access channel (physical random access channel, PRACH) resource. Optionally, the RACH resource further includes a preset value of a timer or a counter of a related random access (random access, RA) process.

8. A configuration parameter of a physical uplink control channel (physical uplink control channel, PUCCH) resource in the safety mode.

Optionally, a PUCCH resource in the safety mode is different from a PUCCH resource in the normal mode. Optionally, the PUCCH resource in the safety mode is a subset of the PUCCH resource in the normal mode. Alternatively, optionally, the PUCCH resource in the safety mode is included in a PUCCH resource range in the normal mode.

9. A corresponding power control parameters in the safety mode.

10. A time division duplexing (time division duplexing, TDD) ratio or other configuration information in the safety mode, that is, a TDD ratio that is allowed to be used by the terminal device in the safety mode, or the like, should be further included.

11. Subcarrier spacing in the safety mode.

A parameter that can be temporarily obtained in the parameters at the first layer, that is, a parameter that cannot be completely fixed in the terminal device and/or the network device includes at least one of the following.
1. Information of a public land mobile network list (public land mobile network list, PLMN list) to which a current cell belongs in the safety mode.

Optionally, the information may be a PLMN list of the cell that is stored before an access failure or a registration failure occurs in the terminal.

Alternatively, optionally, if the terminal can obtain the PLMN list information delivered by the cell (including a case that the system information fails to be received but the PLMN list can still be parsed), the terminal device selects a PLMN and determines whether to allow access based on the PLMN list information delivered by the cell.

Alternatively, optionally, if an access failure or a registration failure occurs on the terminal device, but the access failure or the registration failure is not caused by receiving of the SIB1, the terminal device may perform access by using the obtained security parameter in the SIB1, instead of using the fixed security parameter on the first layer.

Alternatively, optionally, if information in the SIB1 that can be correctly detected by the terminal device is not less than information in the SIB1 of a specific 3GPP release, for example, is not less than information in the SIB1 in 3GPP 15.4.0, when the terminal device accesses the network in the safety mode, although the information of the complete SIB1 cannot be obtained, the access may be performed using the information of not less than a specific version obtained above.

Optionally, the specific version may be fixed in the terminal device, or the network device notifies the terminal device.

It can be learned that, compared with the conventional technologies in which the terminal device can perform network access only after parsing the information about the SIB 1, in this embodiment of this application, even if the information of the complete SIB1 cannot be obtained by parsing, as long as some parameters required for the safety mode included by the SIB 1 are parsed, the terminal device can still perform network access, thereby increasing a probability that the terminal device successfully accesses the network.

Optionally, the parameter at the first layer is a parameter required in a camping phase, for example, may be a parameter required before an RRC connection establishment request is sent.

The parameter at the second layer is a parameter required by the terminal device to establish an RRC connection to the base station. The parameter at the second layer in the parameters corresponding to the safety mode may be fixed in the terminal device. The part of parameters may include at least one of the following.
1. SRB and DRB configuration parameters used by default in the safety mode;
2. Parameters of a MAC layer, an RLC layer, a PDCP layer, an SDAP layer, an RRC layer, or a physical layer in a safety mode, for example, a logical channel configuration, an RLC sequence number length, a PDCP sequence number (serial number, SN) length, and a QoS parameter; and
3. Security algorithm configuration parameters in the safety mode (safety mode), such as encryption algorithm and integrity protection algorithm.

In addition, the parameter of the second layer may also be referred to as an access stratum parameter.

The parameter of the third layer, that is, the non-access stratum parameter, includes at least one of the following.
1. A security-related parameter of the NAS, such as a security algorithm.
2. A security key set identifier of the NAS.

The parameter of the fourth layer, that is, a registration-related parameter, includes at least one of the following.
1. A registration area identifier of the terminal in the safety mode; and
2. A terminal identifier in the safety mode.

Optionally, the terminal may use an identifier used before the terminal enters the safety mode.

The parameter of the fifth layer, that is, a parameter required by the data service or the voice service, or the short message service with a limited rate, includes at least one of the following.
1. A configuration parameter of the data service in the safety mode, including a rate of a corresponding PDU session and a corresponding QoS parameter, where the corresponding QoS parameter is, for example, a corresponding QoS class identifier (QoS class identifier, QCI) level.
2. A configuration parameter of the voice service in the safety mode, for example, a configuration of a corresponding available resource, for example, a semi-persistent resource configuration, a rate corresponding to different voice services in the safety mode, and a QoS parameter.
3. A configuration parameter of the short message service in the safety mode, for example, a configuration of a corresponding available resource and a rate of the short message service in the safety mode.

In the foregoing, that the security parameter is divided into five layers is used as an example. It may be understood that the security parameter may be further divided into more or fewer layers according to an actual application, and a parameter type, a quantity of parameters, and the like included in each layer of security parameter are not limited.

The safety mode is classified into five layers based on the phase of the network access process. In some other embodiments, parameter layers may be further divided from different dimensions. For example, parameter levels are divided based on parameter functions. For example, the security parameter may include at least one of the following: a first-layer parameter required by the terminal device to complete camping in the safety mode; a second-level parameter required by the terminal device to access the network in the safety mode; a third-layer parameter required by the terminal device to perform, in the safety mode, data transmission at a rate not exceeding a preset rate; and a fourth-layer parameter required by the terminal to perform the voice communication or the short message service in the safety mode.

It should be noted that in this embodiment of this application, some of the parameters corresponding to the safety mode may be fixed in the terminal device or in the network, and some of the parameters may be obtained through interaction between devices. For example, in the safety mode, by default, an RRC connection establishment related message or a registration related message between the terminal device and the network device (such as the base station) includes some parameters. In this way, in this case, the parameters that are corresponding to the safety mode and that are carried in the related message do not need to be completely fixed in the terminal device or the network.

In some embodiments, the security parameter may further include another parameter. Based on a limitation of space, the security parameters are not listed one by one in this embodiment of this application.

In this embodiment of this application, at least some of the foregoing security parameters are fixed, stored, or preconfigured in the terminal device or the network device.

In other words, these parameters are directly used when the terminal device accesses the network in the safety mode, and do not need to be allocated or scheduled by the network. It may be understood that, in the foregoing normal mode, although these parameters may also be used, in the normal mode, these parameters are scheduled or allocated by the network, and do not need to be fixed, stored, or preconfigured.

These parameters fixed in the terminal device or the network device also need to be retained in a process of normal communication between the terminal device and the network device, and cannot be modified randomly.

In a possible implementation, these parameters that need to be fixed are stored in a ROM, such as a ROM, of the terminal device or the network device, to prevent modification. Alternatively, the parameters that need to be fixed are stored in another similar storage space, so as to avoid being tampered with.

That the fixed security parameters cannot be changed randomly means that the parameters cannot be replaced or modified by similar parameters in the non-safety mode. The configuration of the initial BWP is used as an example. The configuration of the initial BWP in the safety mode cannot be replaced or modified by the initial BWP configured by the network for the terminal during normal communication.

Optionally, the fixed security parameters are not absolutely unchangeable. For example, if a manufacturer or an operator can modify the security parameters in some way, the fixed security parameters may include one or more of the following parameters: some parameters related to the RRC connection setup, some parameters related to the initial registration, some parameters in the MIB, and some parameters in the SIB1. In this way, a related parameter that is of the access network and that needs to be carried in the RRC connection establishment related message in the conventional technologies may be fixed in the terminal device or the network device, and/or a related parameter that is of the access network and that is carried in the initial registration related message may be fixed in the terminal device or the network device, and/or a parameter related to the access network in the MIB is fixed in the terminal device or the network device, and/or a parameter related to the access network in the SIB1 is fixed in the terminal device or the network device. It may be understood that, in this embodiment of this application, a parameter that needs to be fixed in the terminal device or the network device is a necessary parameter required for accessing the network, that is, a parameter indispensable for accessing the network.

It should be understood that, to implement that the terminal device can enter the safety mode or access the network device in the safety mode, the network device may fix or store some security parameters. In some embodiments, the network device is fixed with a same security parameter as that of the terminal device. That is, the terminal device fixes a security parameter, and the network device correspondingly fixes a same parameter.

Alternatively, in some other embodiments, at least some of the security parameters fixed by the network device may be different from at least some of the security parameters fixed by the terminal device. Optionally, the fixed security parameter of the terminal device is a parameter necessary for accessing the network. Optionally, the fixed security parameter of the network device is a parameter necessary for the network device in the safety mode.

Optionally, the security parameter fixed by the terminal device is a subset of the security parameter fixed by the network device. For example, the network device has fixed parameter 1 to parameter 10, and the terminal device has fixed parameters 1 to 5 (mandatory parameters). The terminal device may subsequently obtain parameter 6 to parameter 10 by using the network device.

Optionally, the security parameter fixed by the network device is a subset of the security parameter fixed by the terminal device.

Alternatively, the security parameter fixed by the terminal device may be for another cases. A quantity of security parameters fixed by the network device and the terminal device is not limited in this embodiment of this application.

In some embodiments, optionally, a manner of configuring or determining the security parameter may be that some values of some corresponding parameters are specified for the safety mode when the network device sends configuration information to the terminal device. For example, when configuring the subcarrier spacing for the terminal device, the network device indicates 15 kHz, 30 kHz, or the like to the terminal device, and indicates 30 kHz as the subcarrier spacing used in the safety mode. Optionally, the terminal device may fix the security parameter configured by the network device locally, and subsequently, the fixed security parameter cannot be modified randomly.

In other words, from a perspective of the terminal device, the specific value of the security parameter may be determined in a manner of system preset or preconfigured (for example, factory configuration), or the parameter values that can be used in the safe mode may be determined in the foregoing manner of configuration and sending by the network device according to indication information of which values of the parameters configured by the network device are available in the safety mode.

When a problem such as compatibility or a fault occurs on the terminal device or the network, the terminal device cannot successfully perform initial access to the network, or cannot register with the network, or cannot successfully camp on the network, and a basic network connection can be established by using the method in this embodiment of this application. In the basic network connection, the terminal may camp on the network in the safety mode (including receiving a paging message in the safety mode, and the like), or maintain the network connection at a limited transmission rate, so that at least the terminal device can be supported in performing a part of a service by using the network connection (or referred to as a connection channel). For example, the terminal device is supported to complete software upgrade, protocol upgrade, or version upgrade, so as to rectify the problem that occurs before the terminal device. In this way, after the problem is rectified, the terminal device can access the network again in a normal connection establishment manner, and perform normal service transmission.

Alternatively, in some cases, when a fault or a compatibility problem occurs in the network, the network may indicate, by using the safety mode channel, the terminal to enter the safety mode or notify the terminal that the fault or the compatibility problem occurs in the network, and after the network problem is further rectified, the terminal can access the network again to complete normal service communication.

Further, before accessing the network by using the security parameter, the terminal device does not need to complete upgrade, so that a service delay of the terminal device can be reduced as much as possible, and service continuity of the terminal device can be improved.

In some other embodiments, that is, after a network access is completed, the terminal device may store a parameter that is used in a current access process and that is required for accessing the network. These parameters may be carried in the RRC connection setup related message, and/or a registration-related message, and/or the MIB, and/or the SIB1. Subsequently, when the terminal device cannot access the network in the normal mode, the terminal device may access the network by using a saved parameter used for accessing the network last time. For example, in the safety mode, the terminal device may perform access by using the configuration parameter provided in the last used or saved system information.

In this embodiment of this application, that the terminal device enters the safety mode means that the terminal device performs a related operation by using the security parameter. For example, the terminal device camps on the network according to the security parameter stored in the ROM. For another example, the terminal device accesses the network according to the security parameter stored in the ROM.

It has been pointed out in the foregoing embodiment that, after determining that the terminal device cannot access the network device in the normal mode or cannot camp on the network device, the terminal device may automatically trigger to enter the safety mode or access the network in the safety mode. In other words, the terminal device may determine, based on a specific condition, whether to enter the safety mode or access the network in the safety mode.

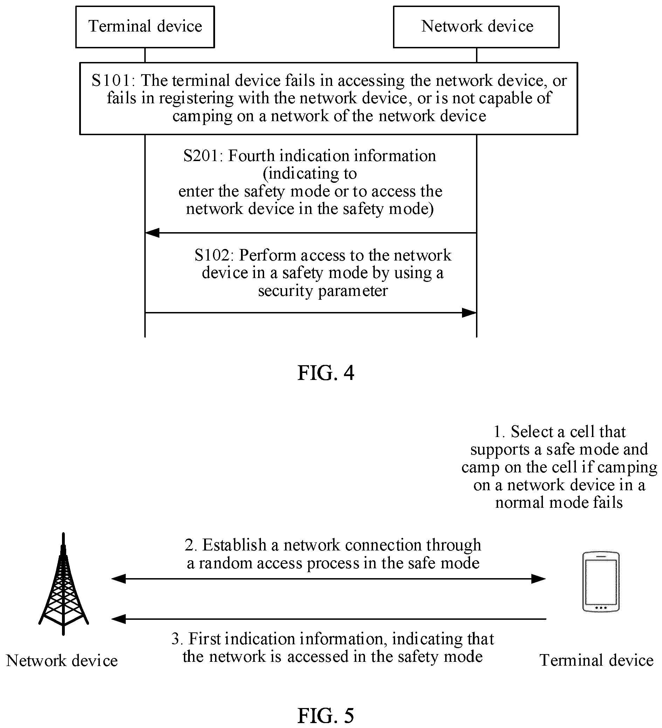

For example, FIG. 5 shows an example in which a terminal device accesses a network in a safety mode after determining that the terminal device cannot access the network device in a normal mode or cannot camp on the network device.

In some other embodiments, the terminal device may alternatively determine, after receiving a message that is sent by the network device and that indicates the terminal device to enter the safety mode, to enter the safety mode or access the network in the safety mode. That is, the network device triggers the terminal device to enter the safety mode or perform safety mode access. Refer to FIG. 4. The method in this embodiment of this application further includes step S201. Step S201: The network device sends fourth indication information to the terminal device. Correspondingly, the terminal device receives the fourth indication information from the network device, where the fourth indication information indicates the terminal device to enter the safety mode, or indicates the terminal device to access the network device in the safety mode.

For example, when a compatibility problem occurs in a network, the network device (for example, a base station) or another network device (AMF) may send the fourth indication information to the terminal device, to indicate the terminal device to enter the safety mode.

For example, a problem such as compatibility or a fault occurs on the network device (for example, the base station). Optionally, the network device may explicitly or implicitly indicate the fourth indication information.

Optionally, that the network device displays the fourth indication information to the terminal device may be implemented as follows: sending, by a network device, a first message to a terminal device, where the first message includes the fourth indication information.

Optionally, that the network device implicitly indicates the fourth indication information to the terminal device may be implemented as follows. The network device sends the first message to the terminal device on a first resource. Correspondingly, the terminal device receives the first message from the network device on the first resource. The first resource is associated with the terminal device performing access in the safety mode or entering the safety mode. In other words, after the terminal device receives the first message from the specific resource, the terminal device can learn that the first message indicates to enter the safety mode or indicating to access the network device in the safety mode.

Optionally, the first message includes but is not limited to a paging (paging) message, an RRC reconfiguration message, or an RRC release (RRC release) message.

In other words, in this embodiment of this application, the network device may trigger, on different occasions or in different cases, the terminal device to enter the safety mode or access the network in the safety mode. For example, the network device may trigger the terminal device to access the network when the network side requests the terminal device to perform a service, or trigger the terminal device to access the network at another time.

For example, the first message is a paging message, and the paging message indicates the terminal device to access the network. If the network device determines at a specific time that the terminal device needs to be woken up to perform the service, the network device may send the paging message to the terminal device, to indicate the terminal device to access the network (for example, a cell) within coverage of the network device. For example, when the network device determines that the terminal device needs to perform a system upgrade operation, or the network device needs to deliver data to the terminal device, or the network device receives an instruction or request for delivering upgrade data from an over-the-air technology (over-the-air technology, OTA) server, the network device delivers the paging message to the terminal device. In the safety mode, the terminal device listens, based on the security parameter, to a paging message delivered by the network (for example, the cell).

The paging message may explicitly include the fourth indication information. For example, the fourth indication information explicitly indicates the terminal device to access the network in the safety mode. When the terminal device receives the paging message, and obtains, by using parsing, the fourth indication information included in the paging message, the terminal device determines to initiate random access in the safety mode. Otherwise, if the paging message does not include the fourth indication information, the terminal device may not respond to the received paging message.

Alternatively, in the safety mode, the terminal device may learn, based on a specific paging parameter in the safety mode, whether the paging message implicitly indicates the fourth indication information. For example, the paging message is received according to the information of the specific control channel of the paging message in the safety mode and the information of the specific search space in the safety mode. In this manner, the terminal device may also implicitly learn that the paging message is a paging message that indicates the terminal device to initiate access in the safety mode. In other words, when the terminal device receives the paging message from the specific resource, the terminal device may infer that the paging message indicates the terminal device to access the network in the safety mode.

It should be noted that before accessing the network device in the safety mode, the terminal device needs to first camp on the network device in the safety mode, that is, camp on the network device by using the security parameter. The terminal device accesses the network device in the safety mode, that is, the terminal device initiates a random access process in the safety mode, so as to access the network device in the safety mode.

In a possible implementation, the terminal device initiates the random access process in the safety mode, and the access network device may include but is not limited to the following steps: sending a random access preamble to the network device, and receiving a random access response from the network device; sending an RRC connection setup (setup) request to the network device; and setting up a corresponding bearer in the safety mode.

The bearer includes but is not limited to PDU sessions, QoS, data bearers, an EPS bearer, a logical channel, E-RAB, and DRB. For ease of description, the bearer is used for description. In other words, in this embodiment of this application, when the bearer is mentioned, the bearer may be understood as or represented as one or more of the PDU session, the QoS flow, the data bearer, the EPS bearer, the E-RAB, and the DRB mentioned above.

For example, in an NR network, the PDU session, the QoS flow, the data bearer, the DRB, and the like corresponding to the safety mode may be established. On an LTE network, a corresponding EPS bearer, E-RAB, DRB, and the like may be set up.

It has been pointed out above that the bearer correspondingly established by the terminal device in the safety mode may be a bearer correspondingly used in the safety mode that is established according to a predefined bearer related parameter, or may be established after the terminal device receives a message sent by the network side, for example, an RRC reconfiguration message. The bearer used in safety mode is set up based on the bearer-related parameters carried in the RRC connection reconfiguration message.

Optionally, in the safety mode, there is only one RRC reconfiguration or the RRC reconfiguration does not need to be performed.

Optionally, the terminal device sends the first indication information to the network device, to indicate the terminal device to access the network device in the safety mode, or indicate the terminal device to perform access to the network device in the safety mode, so that the network device determines, based on the mode of the terminal device, how to subsequently interact with the terminal device. Optionally, after the network device is connected, a state of the terminal device changes from an idle state or an inactive state when camping on the network device to a connected state.

Optionally, the first indication information may further indicate that a compatibility problem or a fault occurs on the terminal device.

Optionally, the first indication information is carried in a random access message. For example, the terminal device explicitly or implicitly indicates the first indication information to the network device by using a message 1 (Msg1), a message 3 (Msg3), or a message A in the random access process, that is, the terminal device is indicated to enter the safety mode. The implicit indication includes but is not limited to indication in a preamble manner. A display manner includes, but is not limited to, indicating that the first indication information is carried in a message.

Correspondingly, after receiving the explicit or implicit first indication information, the network device, for example, the base station, or the core network device (for example, an AMF), correspondingly determines that the terminal device accesses the network side in the safety mode.

Optionally, the network device may indicate, to the terminal device, information of the network accessed in the safety mode (for example, information of the cell). For example, the network device indicates the terminal device to access, in the safety mode, a cell in which the access fails, the registration fails, or the camp cannot be performed currently. Alternatively, the network device indicates the terminal device to access, in the safety mode, a cell other than the cell in which the access fails, the registration fails, or the camp cannot be performed currently. Alternatively, the network device may have another indication manner. Optionally, the network device may explicitly or implicitly indicate, to the terminal device, a cell accessed in the safety mode. For example, if the cell to which the terminal device currently fails in accessing is a cell 1, the terminal device may access the cell 1 in the safety mode, or access a cell other than the cell 1 in the safety mode.

Alternatively, optionally, the terminal device may determine, by itself, the cell to be accessed in the safety mode.

Alternatively, the terminal device may send the first indication information to the network device in another manner, which is not limited in this embodiment of this application.

After the terminal device accesses the network device in the safety mode, the terminal device may perform a service, for example, may transmit the first data.

In this embodiment of this application, optionally, the network device may alternatively enter a corresponding safety mode. An example in which the network device is a base station is used. Optionally, the base station enters the safety mode after receiving the first indication information. In the safety mode, the network device performs communication by using a locally stored security parameter.

The security parameter stored locally on the network device cannot be changed. Optionally, the security parameter is stored in, for example, a ROM of the network device, to prevent tampering.

The bearer-related parameter corresponding to the first data includes at least one of the following: a preset packet data unit session PDU session, preset QoS, a preset data radio bearer DRB, a preset evolved packet system EPS bearer, a preset logical channel, a preset QoS level, a preset data rate, and a preset transmission mode. In other words, the first data may be carried in the one or more bearers for transmission.

For example, when the terminal device accesses the network in the safety mode, the terminal device may perform system upgrade based on an indication of the network and a delivered upgrade service.

Optionally, when the terminal device cannot access or camp on the cell covered by the network device in the normal mode, the terminal device may send the first indication information to the network device, to indicate to access the cell in the safety mode. Alternatively, when the terminal device cannot access or camp on a cell covered by the network device, the terminal device may send the first indication information to the network device, to indicate to access another cell other than the cell in the safety mode. Alternatively, when the terminal device cannot access or camp on all cells covered by the network device, the terminal device may send the first indication information to the network device, to indicate to access the network device in the safety mode.

According to the communication method provided in this embodiment of this application, in one aspect, when the terminal device cannot access or camp on the network side in the normal mode, for example, when the compatibility problem or the fault occurs on the terminal, the terminal device can still effectively access the network side in the safety mode to perform some services, and to improve service continuity of the terminal as much as possible. In another aspect, in a scenario in which the terminal device cannot access or camp on the network in the normal mode due to the compatibility problem, there is no need to perform upgrade and repair on the terminal device before accessing the network. That is, even if the terminal device has not performed upgrade and repair, the terminal device can perform some or all services, and a process of performing a service by the terminal is simplified.

In some other embodiments, a communication capability of the terminal device in the safety mode may be limited, so as to achieve an objective such as reducing network overheads. The communication capability of the terminal device in the safety mode is restricted, including but not limited to: limiting a rate or quality of service (quality of service, QoS) at which the terminal device performs a communication service in the safety mode. In a possible implementation, limiting a rate, QoS, or the like at which the terminal device performs the communication service in the safety mode may be limited based on one or more in the fifth layer parameter in the foregoing security parameters.

Optionally, in the safety mode, the rate at which the terminal device transmits the first data is limited to be less than or equal to a first rate threshold.

Optionally, transmitting the first data is used as an example, and a rate, QoS, sending power consumption, and the like of the first data may be limited based on a type of the first data. For example, when the first data is data in the voice service or the short message service, a rate for transmitting the first data is limited to be less than or equal to a second rate threshold, for example, dozens of bits are transmitted per second. When the first data is data in a non-voice service or a non-short message service, the rate for transmitting the first data is limited to be less than or equal to a third rate threshold.

For another example, when the first data is data in the voice service, the rate for transmitting the first data is limited to be less than or equal to a fourth rate threshold; when the first data is data in the short message service, the rate for transmitting the first data is limited to be less than or equal to a fifth rate threshold; when the first data is data in a data service, the rate for transmitting the first data is limited to be less than or equal to a sixth rate threshold; and when the first data is data other than the voice service, the short message service, or the data service, the rate for transmitting the first data is limited to be less than or equal to a seventh rate threshold.

A specific threshold setting manner is not limited in this embodiment of this application.

Optionally, another restriction condition may be introduced to limit a communication capability of the terminal device, or another communication capability of the terminal device may be limited, so as to prevent the normal terminal device from using the foregoing safety mode unnecessarily. The following describes several types of communication capabilities that need to be restricted as an example.

Optionally, limiting a communication capability of the terminal device may be limiting a type of first data transmitted by the terminal device.

For example, when the network side or the terminal device is incompatible with the terminal device due to upgrade, the terminal device may be restricted from transmitting only upgrade-related data. For another example, only first data whose priority is higher than a specific threshold is transmitted.

For another example, the network device, for example, an AMF or a base station, may intercept or filter some service requests of the terminal device, to avoid sending an unnecessary paging message to the terminal device. For example, if the AMF (or the base station) receives a service request used for requesting the terminal device to initiate a common service, the AMF (or the base station) may intercept the service request because the AMF (or the base station) determines that the terminal device is currently in the safety mode and cannot access the network in the normal mode, so as to avoid sending an unnecessary paging message to the terminal device.

Optionally, the communication capability of the terminal device may be further limited based on the bearer-related parameter. Specifically, when the terminal device locally triggers specific data transmission, the terminal device needs to determine, according to the foregoing bearer-related parameter requirements, whether the data transmission requirement exceeds the bearer-related parameter requirements. In a case in which the service transmission requirement triggered by an upper layer (for example, an application layer) does not exceed the bearer-related parameter requirements in the safety mode, the terminal device may trigger to perform data transmission in the safety mode; otherwise, the terminal device does not trigger a data transmission operation. For example, when a data rate at the application layer is greater than a maximum rate that can be provided by a bearer (for example, a QoS flow), the terminal device does not perform the data transmission operation, so that resource overheads caused by the data transmission of the terminal device can be reduced, and transmission resource overheads in the network can also be reduced.

Alternatively, in some other embodiments, when a service transmission requirement triggered by an upper layer (for example, an application layer) exceeds a bearer-related parameter requirement in the safety mode, the terminal device may trigger to perform data transmission in the safety mode, and may determine, with reference to another factor, whether to perform data transmission. For example, if the to-be-transmitted data of the terminal device is high-priority data, data transmission may be performed. For example, when the data rate of the application layer is greater than the maximum rate that can be provided by the QoS flow, but the data is protocol version upgrade or other important data, the terminal device performs the data transmission operation, and transmits the data at a limited rate, so as to ensure that an important service is executed as much as possible.

Optionally, limiting the communication capability of the terminal device may further be limiting a data volume or a quantity of transmission times of the first data transmitted by the terminal device. In the safety mode, a data volume of the first data is less than or equal to a first threshold; and/or a quantity of transmission times of the first data is less than or equal to a second threshold.

That the data volume of the first data is less than or equal to the first threshold may mean that a total data volume of data transmitted by the terminal device for a plurality of times in the safety mode is less than or equal to the first threshold, or a data volume of data transmitted once by the terminal device in the safety mode is less than or equal to the first threshold.

Optionally, limiting the communication capability of the terminal device may also be limiting a quantity of times that the terminal device accesses or enters the safety mode. For example, the safety mode access quantity of the terminal device is less than or equal to the third threshold; or a quantity of times that the terminal device enters the safety mode is less than or equal to a fourth threshold; or a quantity of access times of performing, by the terminal device, the safety mode of service transmission of the preset type (such as data service transmission, voice service transmission, or short message service transmission) is less than or equal to a fifth threshold; or a quantity of access times of performing, by the terminal device, the safety mode of service transmission of the preset type (such as the voice service) is less than or equal to a sixth threshold.

Optionally, the quantity of access times of the safety mode is limited according to different service types. For example, if the service transmitted by the terminal is the data service, the quantity of access times for performing the safety mode of data service transmission is limited to be less than or equal to an eighth threshold. If the service transmitted by the terminal is the voice service, the quantity of access times for performing the safety mode of voice service transmission is limited to be less than or equal to a seventh threshold. If the service transmitted by the terminal is the short message service, the quantity of access times for performing the safety mode of the short message service transmission is limited to be less than or equal to a ninth threshold.

For another example, if the service transmitted by the terminal is the data service, the quantity of access times for performing the safety mode of the data service transmission is limited to be less than or equal to the eighth threshold. If the service transmitted by the terminal is the voice service or the short message service, the quantity of access times for performing the safety mode of voice service or short message service transmission is limited to be less than or equal to the seventh threshold.

For example, the terminal device may obtain a maximum amount of data that is allowed to be transmitted in the safety mode, or a maximum quantity of times that data transmission is allowed to be triggered in the safety mode. Correspondingly, when performing data transmission in the safety mode, the terminal device needs to determine a sum of transmitted quantities. If a transmitted data volume already exceeds a maximum allowed data volume in a process of triggering communication in the safety mode once, the terminal device should stop data transmission before the maximum allowed data volume is exceeded.

For another example, the terminal device records a quantity of times of triggering entering the safety mode in the safety mode. When the quantity of times exceeds the limit, the terminal device should subsequently stop entering the safety mode, or no longer enter the safety mode in a period of time.

For example, if the quantity of times that the terminal device accesses the network in the safety mode is 10, data transmission is performed after 6 accesses, and the fifth threshold is 8. Because 6 is less than 8, the terminal device may further access the network in the safety mode. For another example, if the quantity of times that the terminal device accesses the network in the safety mode is 10, data transmission is performed after 8 accesses, and the fifth threshold is 8. Because 8 has reached the upper limit of the quantity of times, the network side prohibits the terminal device from accessing the network in the safety mode in a period of time. The period of time may be flexibly configured according to an actual application.

Each threshold may be predefined. Each threshold in this embodiment of this application may be flexibly set based on the actual application. A specific value of each threshold is not limited in this embodiment of this application. The thresholds may be obtained by the terminal device from the network device. That the terminal device obtains the thresholds from the network device may be that the terminal device obtains the thresholds from the network device when the terminal device can access the network device in the normal mode, or some thresholds may be preconfigured, and some thresholds may be obtained from the network device.

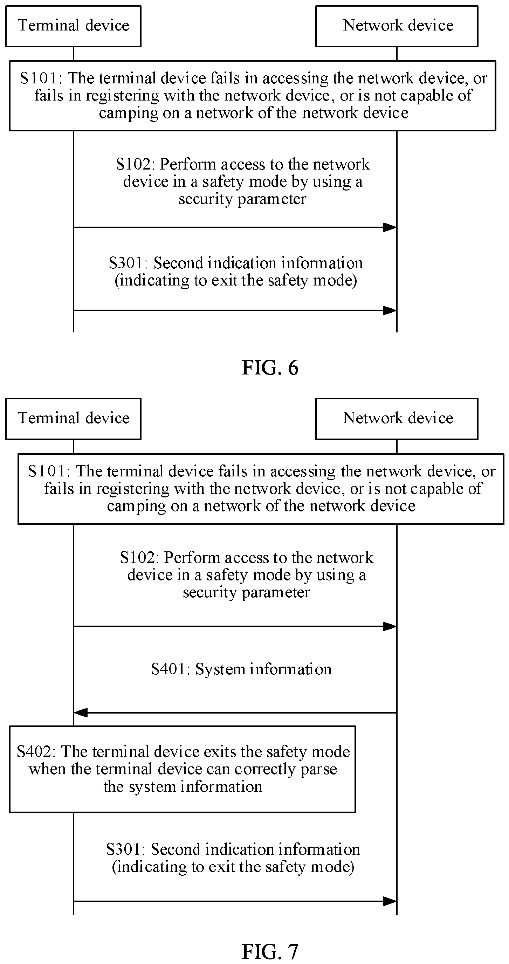

In some other embodiments, the terminal device may further exit the safety mode, enter the normal mode, and communicate in the normal mode. Correspondingly, refer to FIG. 6. Optionally, the method in this embodiment of this application may further include S301. S301: The terminal device sends second indication information to the network device. The second indication information indicates to exit the safety mode. In this way, the network device can determine that the terminal device has exited the safety mode. The network device (such as the base station) and another device (such as the AMF) may remove the safety mode state of the corresponding terminal device, and consider the terminal device as a normal device. In subsequent communication, the terminal device enters the normal mode to operate, and may normally perform a data transmission service.

In a possible implementation, when determining that the terminal device may exit the safety mode, the terminal device may trigger re-access to the network in the safety mode or the normal mode. (For example, in the case of the application layer or another layer triggering of the terminal device), so as to report the first indication information, to indicate that the terminal device has exited the safety mode, or to indicate that the fault or compatibility problem of the terminal device is eliminated. Optionally, the first indication information is carried in a random access message, for example, carried in a message 1, a message 3, or a message A, or carried in another message, which is not limited in this embodiment of this application.

Optionally, in the following several cases, the terminal device may exit the safety mode.

Case 1: The terminal device receives the system information, and exits the safety mode when the terminal device can correctly parse the system information. That is, steps S401 and S402 shown in FIG. 7.

An example in which a compatibility problem occurs in the terminal device is used. Previously, the terminal device cannot access or camp on a network device in a normal mode, and the terminal device interacts with a network side (for example, interacts with a base station) in a safety mode to rectify the compatibility problem. If the terminal device can receive and correctly parse the system information of the network side (for example, the base station), it indicates that the compatibility problem of the terminal device is rectified. For example, the terminal device accesses the network in the safety mode, and interacts with the network, so that protocol versions between the terminal device and the network are consistent. In this way, the terminal device can correctly parse the system information from the network. In this case, the terminal device may exit the safety mode and operate in the normal mode.

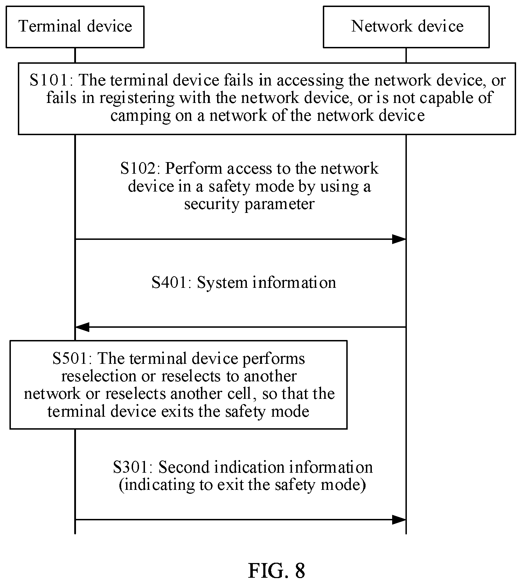

Case 2: Refer to FIG. 8. The communication method in this embodiment of this application further includes the following steps. S501. The terminal device performs reselection or reselects to another network or reselects another cell, so that the terminal device exits a safety mode.

In case 2, that the terminal device reselects another network means that the terminal device may subsequently camp on or access the network in the normal mode. In this case, the terminal device exits the safety mode, and camps on or accesses the network in the normal mode.

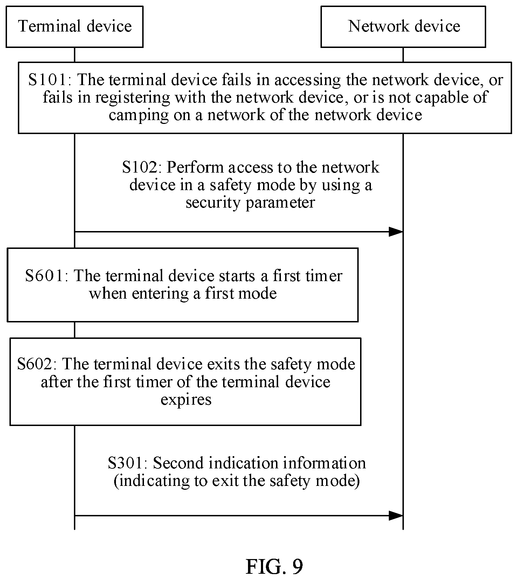

Case 3: The terminal device determines, in a scheduled manner, whether to exit the safety mode. In a possible implementation, refer to FIG. 9. This manner may be implemented as S601. S601: The terminal device starts a first timer when entering the safety mode. S602. The terminal device exits the safety mode after the first timer of the terminal device expires.

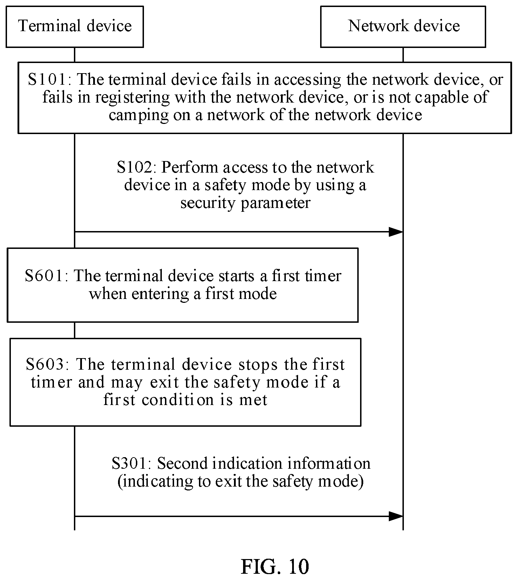

Optionally, refer to FIG. 10. After the first timer is started, in some cases, the terminal device may further perform S603. S603: The terminal device stops the first timer and may exit the safety mode, if a first condition is met.

The first condition includes but is not limited to any one of the following conditions. The terminal device accesses or camps on the current network in the normal mode, the terminal device reselects another network, the terminal device can parse the system information from the network, and the terminal device receives the third indication information. The third indication information indicates the terminal device to exit the safety mode.

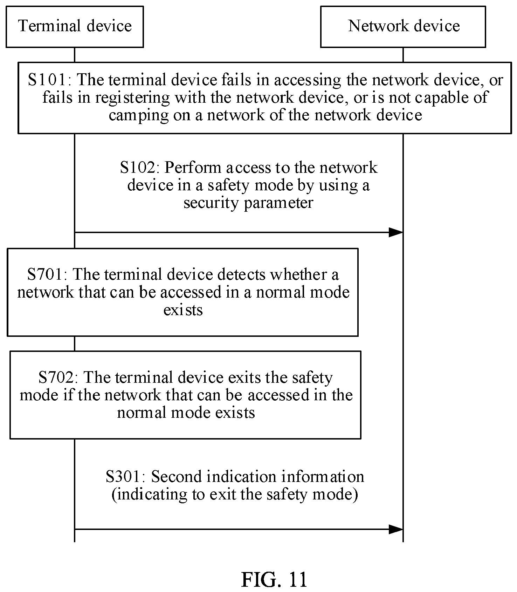

Case 4: Refer to FIG. 11. The terminal device may further perform S701. S701: The terminal device detects whether a network that can be accessed in a normal mode exists. S702: The terminal device exits the safety mode if the network that can be accessed in the normal mode exists.

It may be understood that the terminal may detect whether the network device can be accessed in the normal mode, or detect whether the network (such as the cell) that can be accessed in the normal mode exists. If the network that can be accessed in a normal mode exists or the network device can be accessed in the normal mode, the terminal device may access the network in the normal mode, so as to perform a service without continuing to camp on or access the current network in the safety mode, that is, the terminal device may exit the safety mode.

In a possible implementation, in the safety mode, the terminal device may also attempt to access the network in the safety mode at a specific period (or according to another policy), to detect whether the terminal device can operate in the normal mode. For example, if the terminal device enters the safety mode due to a network cause, for example, a network cause, the terminal device may determine, by periodically attempting to access, whether a network fault or a network compatibility problem has been rectified. In a possible implementation, if the network fault or the compatibility problem is rectified, in a process in which the terminal device periodically accesses the network in the safety mode, the terminal device may receive indication information from the network. The indication information may indicate the terminal device to exit the safety mode, and/or indicate that the network failure or the compatibility issue has been rectified. In this way, the terminal device may determine that the network that can be accessed in the normal mode exists.

Optionally, the indication information may further indicate the terminal device to operate in the normal mode, or trigger the terminal to access the network again in the normal mode, so that the terminal device can operate in the normal mode.

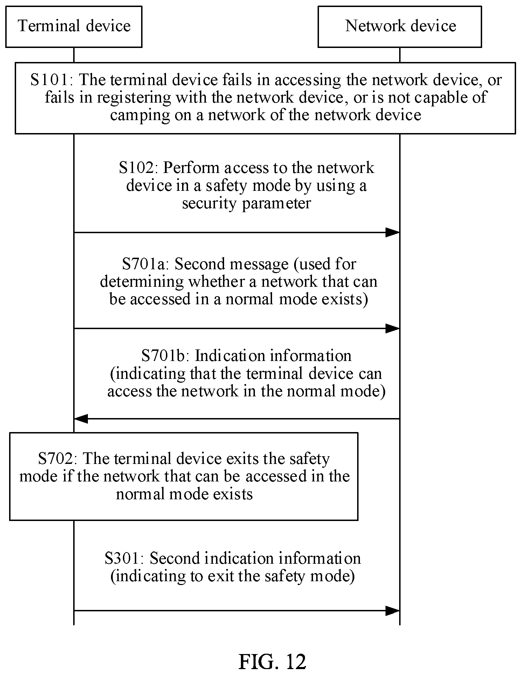

Optionally, refer to FIG. 12. Step S701 of the terminal device detects whether a network that can be accessed in a normal mode exists may be implemented as step S701a and S701b. S701a: The terminal device sends a second message, where the second message is used for determining whether the network that can be accessed in the normal mode exists. S701b. The terminal device receives indication information from a network, where the indication information indicates that the terminal device can access the network in a normal mode, or the indication information indicates the terminal device to exit the safety mode.

Optionally, the terminal device periodically sends the second message, and the sending period may be flexibly set, which is not limited in this embodiment of this application.

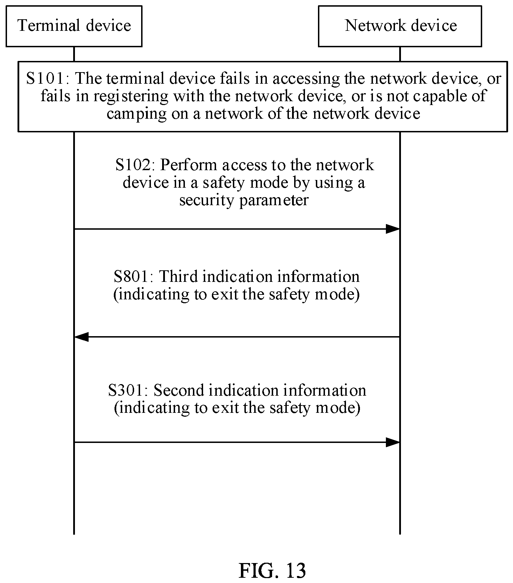

Case 5: Refer to FIG. 13. The terminal device may further perform S801. S801: Receive third indication information from the network device, where the third indication information indicates to exit the safety mode.

Different from case 4, in which a periodic message of the terminal device is required to trigger the network device to deliver the indication information, in case 5, the network device may actively deliver the third indication information, so as to indicate the terminal device to exit the safety mode. For example, if the network fault or the compatibility problem has been rectified, the network device actively sends the third indication information to the terminal device.

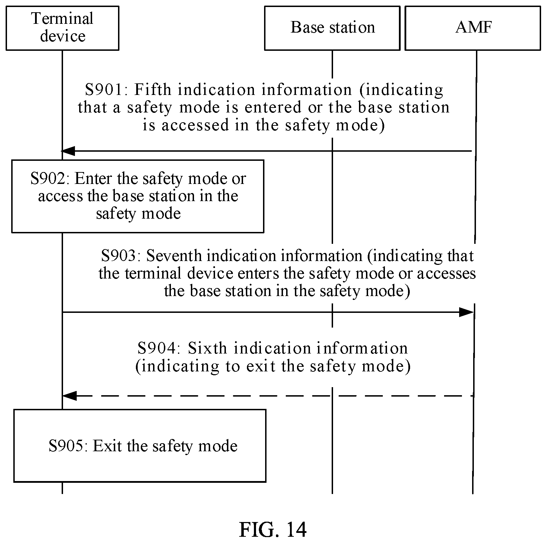

The foregoing mainly describes the communication method in embodiments of this application by using an example in which the network device is the access network device (such as the base station). In some other embodiments, the network device may alternatively be a core network device. In other words, the core network device may also trigger the terminal device to enter the safety mode or access the network in the safety mode. The following describes the technical solutions in embodiments of this application by using an example in which the core network device is the AMF (only an example, or may be another) and the access network device is the base station (only an example, or may be another). Refer to FIG. 14. The method includes the following steps.

S901: The AMF sends fifth indication information to the terminal device.

Correspondingly, the terminal device receives the fifth indication information from the AMF. The fifth indication information indicates the terminal device to enter the safety mode or indicate the terminal device to access the base station in the safety mode.

Optionally, the AMF sends the fifth indication information to the terminal device by using the base station.

For example, when the compatibility or fault problem occurs on the AMF, the AMF sends the fifth indication information to the terminal device.

S902: The terminal device enters the safety mode or accesses the base station in the safety mode.

Optionally, if the fifth indication information indicates the terminal device to enter the safety mode, the terminal device selects a cell, and camps on the cell in the safety mode. If the fifth indication information indicates the terminal device to access the base station in the safety mode, the terminal device obtains the MIB and the security parameter corresponding to the safety mode, and accesses the base station based on the MIB and the security parameter.

S903: The terminal device sends seventh indication information to the AMF.

Correspondingly, the AMF receives the seventh indication information from the terminal device.

The seventh indication information indicates that the terminal device has entered the safety mode or has accessed the base station in the safety mode.

Optionally, step S903 may be a sub-step of S902, or may be a step that is independent of S902.

Optionally, after receiving the seventh indication information from the terminal device, the AMF learns that the terminal device has entered the safety mode or accesses the network in the safety mode. In this case, the AMF also correspondingly enters the safety mode, and communicates with the terminal device in the safety mode by using the security parameter.

(Optional) S904: The AMF sends sixth indication information to the terminal device.

The sixth indication information indicates the terminal device to exit the safety mode.

Optionally, when the AMF determines that the terminal device needs to exit the safety mode, for example, the fault of the AMF has been rectified, the AMF sends the sixth indication information to the terminal device.

S905: The terminal device exits the safety mode.

It should be noted that in the embodiment corresponding to FIG. 14, the AMF may further trigger the terminal device to enter the safety mode, and the terminal device is triggered to access the base station in the safety mode (for example, triggered by service data of the terminal device). Alternatively, the terminal device may determine, in the timing manner, whether to exit the safety mode, or determine, in another manner, whether to trigger the terminal device to exit the safety mode.

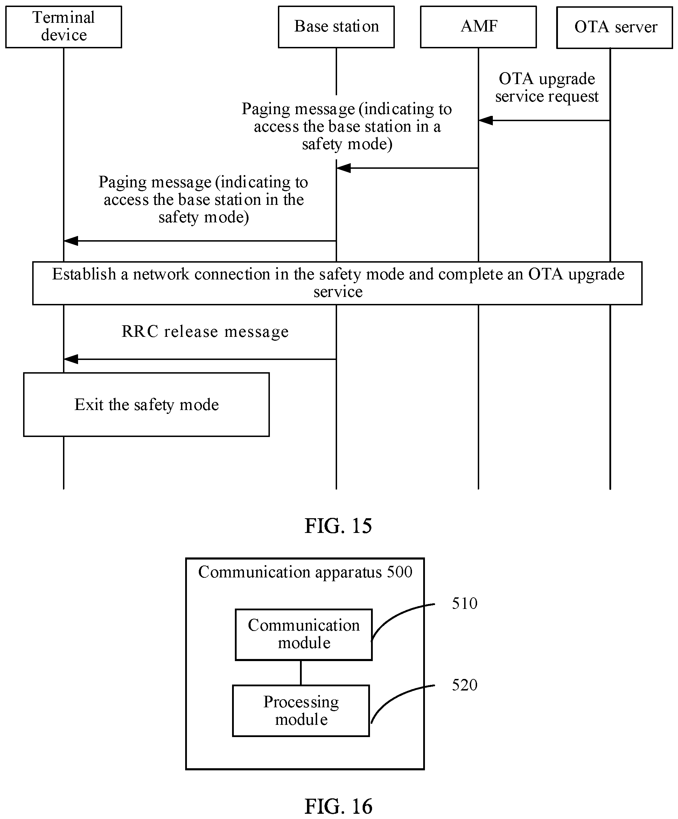

An example in which an OTA server initiates an OTA service request is used. FIG. 15 shows an application example of a technical solution according to an embodiment of this application. If the AMF receives the OTA upgrade service request from the OTA server, and determines that the compatibility problem occurs, the AMF sends, to the terminal device, a paging message that explicitly or implicitly carries the indication information to prevent the terminal device from being upgraded because the terminal device cannot access the network due to the compatibility problem. In this way, the terminal device learns that a network connection needs to be established in the safety mode, so as to complete an OTA upgrade service. After the terminal device completes the OTA upgrade service, the base station may send an RRC release message to the terminal device, and the terminal device exits the safety mode after receiving the RRC release message.

The foregoing describes the communication method provided in embodiments of this application. The following describes in detail a communication apparatus provided in an embodiment of this application with reference to FIG. 16 to FIG. 20.

For example, FIG. 16 is a schematic diagram of a structure of a communication apparatus according to an embodiment of this application. As shown in FIG. 16, the communication apparatus 500 includes a communication module 510 and a processing module 520. The communication apparatus 500 may be configured to implement functions of the terminal device in the foregoing method embodiments. The communication apparatus 500 may be an independent terminal device, for example, a handheld terminal device, an onboard terminal device, or vehicle user equipment, or may be an assembly in the terminal device, for example, may be a chip or a chip system.

The apparatus stores a first parameter, and the first parameter is a parameter used by the apparatus in a first mode. In a possible design, when the communication apparatus 500 shown in FIG. 16 performs the communication method shown in any one of FIG. 3 to FIG. 15, the processing module 520 is configured to: control the apparatus to perform access to the network device in the first mode by using the first parameter when the apparatus fails in accessing a network device, or fails in registering with the network device, or is not capable of camping on a network of the network device.

Optionally, the communication module 510 is configured to send first indication information to the network device, where the first indication information indicates the apparatus to perform access to the network device in the first mode.

Optionally, a detailed description of the first parameter can be found in the method embodiment.

Optionally, a rate of the first data transmitted by the apparatus is less than or equal to a first rate threshold.

Optionally, when the first data transmitted by the apparatus is voice service data or short message service data, the rate of the first data is less than or equal to a second rate threshold; or
when the first data transmitted by the apparatus is non-voice service data or non-short message service data, the rate of the first data is less than or equal to a third rate threshold.

Optionally, a data volume of first data transmitted by the apparatus is less than or equal to a first threshold, and/or a quantity of transmission times of the first data is less than or equal to a second threshold.

Optionally, a quantity of times that the apparatus enters the first mode is less than or equal to a first quantity threshold; or a quantity of times that the apparatus enters the first mode is less than or equal to a second quantity threshold; or a quantity of access times in the first mode that the apparatus performs service transmission is less than or equal to a third quantity threshold.

Optionally, the failure to access the network device includes: there is no accessible first network, or a quantity of RRC connection setup failures reaches L, or a quantity of RRC connection reestablishment failures of the terminal device reaches M; and/or
the failing to register with the network device includes: a quantity of registration failures reaches N, where
L, M, and N are positive integers.

Optionally, the communication module 510 is further configured to send second indication information, where the second indication information indicates to exit the first mode.

Optionally, the communication module 510 is further configured to receive system information of the network device.

The processing module 520 is further configured to control the apparatus to exit the first mode when the system information is correctly parsed; or
the processing module 520 is further configured to control the apparatus to exit the first mode if the apparatus reselects another network or another cell.

Optionally, the processing module 520 is further configured to detect whether the network device is accessed in a second mode, and control the apparatus to exit the first mode; and if the network device is accessed in the second mode, and the second mode is different from the first mode, or
the communication module 510 is further configured to receive third indication information from the network device, where the third indication information indicates the apparatus to exit the first mode.

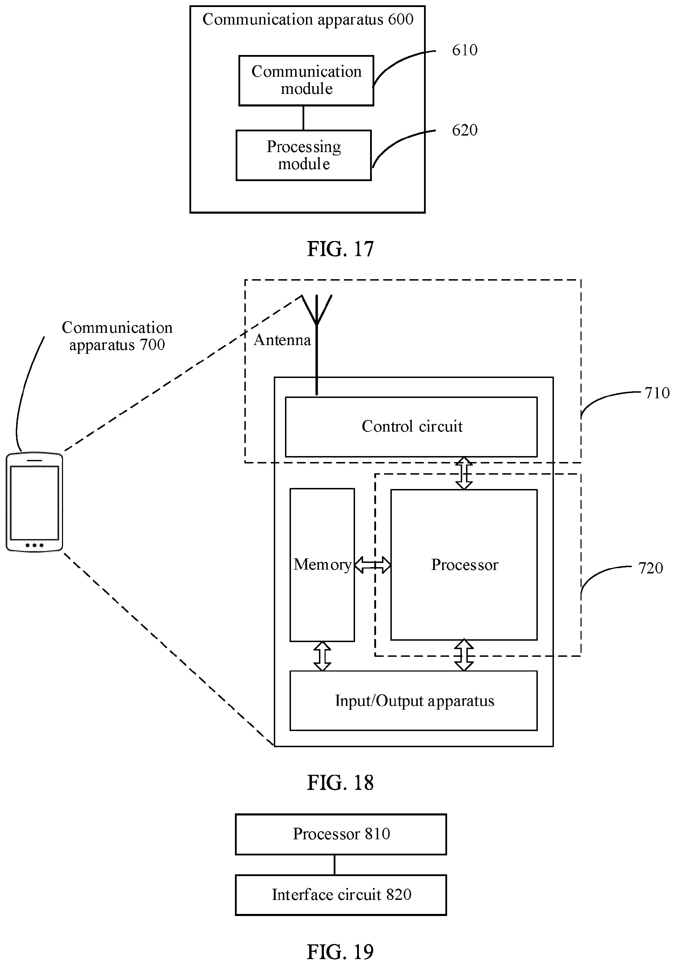

For example, FIG. 17 is another schematic diagram of a structure of a communication apparatus according to an embodiment of this application. As shown in FIG. 17, the communication apparatus 600 includes a communication module 610 and a processing module 620. The communication apparatus 600 may be configured to implement functions of the network device in the foregoing method embodiments. The communication apparatus 600 may be an independent terminal device, or may be an assembly in the network device, for example, may be a chip or a chip system.

The apparatus stores a first parameter, and the first parameter is a parameter used by the apparatus in a first mode. In a possible design, when the communication apparatus 600 shown in FIG. 17 performs the communication method shown in any one of FIG. 3 to FIG. 15, the communication module 610 is configured to receive first indication information from a terminal device, and the first indication information indicates the terminal device to perform access to the apparatus in the first mode; and
the processing module 620 is configured to control the apparatus to communicate with the terminal device in the first mode by using the first parameter.

Optionally, the description of the first parameter can be found in the method embodiment.

Optionally, the communication module 610 is further configured to send third indication information to the terminal device, where the third indication information indicates the terminal device to exit the first mode.

Optionally, the communication apparatus shown in FIG. 16 or FIG. 17 may further include a storage module (not shown in FIG. 16 or FIG. 17), and the storage module stores a program or instructions. When the processing module executes the program or the instruction, the communication apparatus shown in FIG. 16 or FIG. 17 can perform any communication method shown in FIG. 3 to FIG. 15.

For technical effects of the communication apparatus shown in FIG. 16 or FIG. 17, refer to technical effects of the communication methods shown in FIG. 3 to FIG. 15. Details are not described herein again.

The processing module in the communication apparatus shown in FIG. 16 or FIG. 17 may be implemented by a processor or a processor-related circuit assembly, and may be a processor or a processing unit. The communication module may be implemented by a transceiver or a transceiver-related circuit assembly, and may be a transceiver or a transceiver unit. The communication module may include a receiving module and a sending module. The receiving module is configured to implement receiving. The sending module is configured to implement a sending function. A specific implementation of the transceiver module is not specifically limited in this embodiment of this application. Operations and/or functions of the modules in the communication apparatus 500 or the communication apparatus 600 are separately used for implementing corresponding procedures of any communication method shown in FIG. 3 to FIG. 15. For brevity, details are not described herein again.

An embodiment of this application further provides a communication apparatus. The communication apparatus may be a terminal device or may be a circuit. The communication apparatus may be configured to perform operations performed by the terminal device in the foregoing method embodiments.

FIG. 18 is still another schematic diagram of a structure of a communication apparatus according to an embodiment of this application. As shown in FIG. 18, the communication apparatus 700 may be specifically a terminal device. For ease of understanding and illustration, in FIG. 18, a mobile phone is used as an example of the terminal device. As shown in FIG. 18, the communication apparatus 700 includes a processor, and may further include a memory. Certainly, the communication apparatus may further include a radio frequency circuit, an antenna, an input/output apparatus, and the like. The processor is mainly configured to process a communication protocol and communication data, control the communication apparatus 700, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send the radio frequency signal in a form of an electromagnetic wave. The input/output apparatus, such as a touchscreen, a display, or a keyboard, is mainly configured to: receive data input by a user and output data to the user. It should be noted that some types of communication apparatus 700 may not have the input/output apparatus.

When data needs to be sent, the processor performs baseband processing on the data to be sent, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus 700, the radio frequency circuit receives the radio frequency signal by using the antenna, converts the radio frequency signal into a baseband signal, and outputs the baseband signal to the processor. The processor converts the baseband signal into data and processes the data. For ease of description, FIG. 18 shows only one memory and one processor. In an actual communication apparatus 700, there may be one or more processors and one or more memories. The memory may also be referred to as a storage medium, a storage device, or the like. The memory may be disposed independently of the processor, or may be integrated with the processor, which is not limited in this embodiment of this application.

In this embodiment of this application, the antenna and the radio frequency circuit that have a transceiver function may be considered as a transceiver unit of the communication apparatus 700, and the processor that has a processing function may be considered as a processing unit of the communication apparatus 700. As shown in FIG. 18, the communication apparatus 700 includes a transceiver unit 710 and a processing unit 720. The transceiver unit 710 may also be referred to as a transceiver, a transmitter, a transceiver apparatus, a transceiver circuit, or the like. The processing unit 720 may also be referred to as a processor, a processing board, a processing module, a processing apparatus, or the like. Optionally, a component configured to implement the receiving function in the transceiver unit 710 may be considered as a receiving unit, and a component configured to implement the sending function in the transceiver unit 710 may be considered as a sending unit. That is, the transceiver unit 710 includes the receiving unit and the sending unit. The receiving unit may also be referred to as a receiver machine, a receiver, a receiving apparatus, a receiving circuit, or the like. The sending unit may also be referred to as a transmitter machine, a transmitter, a transmitting apparatus, a transmitting circuit, or the like.

It should be understood that the transceiver unit 710 is configured to perform a sending operation and a receiving operation on a terminal device side in the foregoing method embodiment, and the processing unit 720 is configured to perform another operation on the terminal device in the foregoing method embodiment except a sending and receiving operation.

For example, in a possible implementation, the transceiver unit 710 is configured to perform the receiving operation on the terminal device side in S901 in FIG. 9, and/or the transceiver unit 710 is further configured to perform other receiving and sending steps on the terminal device side in this embodiment of this application. The processing unit 720 is configured to perform S902 in FIG. 9, and/or the processing unit 720 is further configured to perform another processing step on the terminal device side in this embodiment of this application.

For another example, in another implementation, the transceiver unit 710 is configured to perform the receiving operation on the terminal device side in S102 in FIG. 13, and/or the transceiver unit 710 is further configured to perform another receiving and sending step on the terminal device side in this embodiment of this application. The processing unit 720 is configured to perform S702 in FIG. 12, and/or the processing unit 720 is further configured to perform another other processing step on the terminal device side in this embodiment of this application.

For another example, in still another implementation, the transceiver unit 710 is configured to perform S301 in FIG. 11, and/or the transceiver unit 710 is further configured to perform another receiving and sending step on the terminal device side in this embodiment of this application. The processing unit 720 is configured to perform S702 in FIG. 11, and/or the processing unit 720 is further configured to perform another processing step on the terminal device side in this embodiment of this application.

When the communication apparatus 700 is a chip-type apparatus or a circuit, the communication apparatus 700 may include a transceiver unit and a processing unit. The transceiver unit may be an input/output circuit and/or a communication interface. The processing unit is an integrated processor, a microprocessor, or an integrated circuit.

FIG. 19 is still another schematic diagram of a structure of a communication apparatus according to an embodiment of this application. As shown in FIG. 19, the communication apparatus includes at least one processor 810 and at least one interface circuit 820. The processor 810 and the interface circuit 820 may be interconnected by using a line. For example, the interface circuit 820 may be configured to receive signals from another apparatus. For another example, the interface circuit 820 may be configured to send a signal to another apparatus (for example, the processor 810). For example, the interface circuit 820 may read an instruction stored in the memory, and send the instruction to the processor 810. When the instruction is executed by the processor 810, the communication apparatus may perform steps in the communication method in the foregoing embodiment. Certainly, the communication apparatus may further include another discrete component, which is not specifically limited in this embodiment of this application.

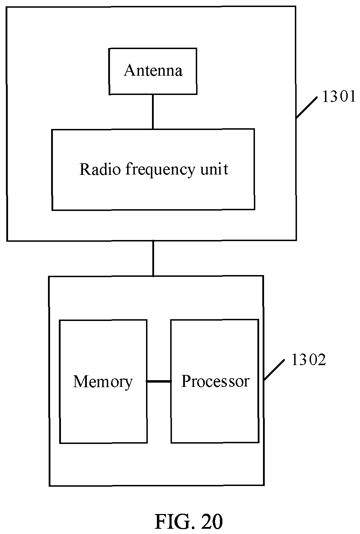

An embodiment of this application further provides a network device. FIG. 20 is a simplified schematic diagram of a structure of a network device. For example, that the network device is a base station is used as an example, and the base station includes a part 1301 and a part 1302. Part 1301 is mainly configured to receive and transmit a radio frequency signal and convert the radio frequency signal and the baseband signal. The part 1302 is mainly configured to perform baseband processing, control the base station, and the like. The part 1301 may be generally referred to as a transceiver unit, a transmitter, a transceiver circuit, a transceiver, or the like. The part 1302 is usually a control center of the base station, and may be generally referred to as a processing unit, and is configured to control the base station to perform related steps. For details, refer to the description of the related part above.

The transceiver unit in part 1301 may also be referred to as a transmitter, a transceiver, or the like, and includes an antenna and a radio frequency unit. The radio frequency unit is mainly configured to perform radio frequency processing. Optionally, a component that is in the part 1301 and that is configured to implement a receiving function may be considered as a receiving unit, and a component that is in the part and that is configured to implement a sending function may be considered as a sending unit. In other words, the part 1301 includes the receiving unit and the sending unit. The receiving unit may also be referred to as a receiver machine, a receiver, a receiving circuit, or the like. The sending unit may be referred to as a transmitter machine, a transmitter, a transmitting circuit, or the like.

The part 1302 may include one or more boards. Each board may include one or more processors and one or more memories. The processor is configured to read and execute a program in the memory to implement a baseband processing function and control the base station. If there are a plurality of boards, the boards can be interconnected to increase the processing capability. In an optional implementation, the plurality of boards may share one or more processors, or the plurality of boards share one or more memories, or the plurality of boards share one or more processors at the same time. The memory and the processor may be integrated together, or may be disposed independently. In some embodiments, the part 1301 and the part 1302 may be integrated together, or may be disposed independently. In addition, all functions in the part 1302 may be integrated into one chip for implementation, or some functions may be integrated into one chip for implementation and some functions are integrated into one or more other chips for implementation, which are not limited in this application.

For example, in an implementation, the processing unit is configured to configure various indication information for the terminal device, and/or another step in this application. The transceiver unit is configured to perform steps performed by the network device in steps such as S801 in FIG. 13, and/or another step in this application.

An embodiment of this application provides a communication system, including a terminal device and a network device.

The terminal device and the network device are separately configured to perform the communication method shown in any one of FIG. 3 to FIG. 15.

The communication system may further include another apparatus or device, which are not limited in this embodiment of this application.

An embodiment of this application further provides a chip system, including a processor, where the processor is coupled to a memory, the memory is configured to store a program or instructions, and when the program or the instruction is executed by the processor, the chip system implements the method in any one of the foregoing method embodiments.

Optionally, there may be one or more processors in the chip system. The processor may be implemented by hardware or by software. When implemented by using hardware, the processor may be a logic circuit, an integrated circuit, or the like. When being implemented by using software, the processor may be a general-purpose processor, and is implemented by reading software code stored in the memory.

Optionally, there may be one or more memories in the chip system. The memory may be integrated with the processor, or may be disposed separately from the processor, which is not limited in this application. For example, the memory may be a non-transitory processor, for example, a read-only memory ROM. The memory and the processor may be integrated on a same chip, or may be separately disposed on different chips. A type of the memory and a manner of setting the memory and the processor are not specifically limited in this application.

For example, the chip system may be a field programmable gate array (field programmable gate array, FPGA), may be an application specific integrated circuit (application specific integrated circuit, ASIC), or may be a system on chip (system on chip, SoC), or may be a central processor unit (central processor unit, CPU), or may be a network processor (network processor, NP), or may be a digital signal processor (digital signal processor, DSP), or may be a micro controller unit (micro controller unit, MCU), or may be a programmable logic device (programmable logic device, PLD) or another integrated chip.

It should be understood that the steps in the foregoing method embodiments may be completed by using an integrated logic circuit of hardware in the processor or instructions in a form of software. Steps of the method disclosed with reference to embodiments of this application may be directly performed by a hardware processor, or may be performed by using a combination of hardware and software modules in the processor.

An embodiment of this application further provides a storage medium, which is configured to store instructions used by the foregoing communication apparatus.

An embodiment of this application further provides a computer-readable storage medium. The computer-readable storage medium stores a computer-readable instruction. When a computer reads and executes the computer-readable instruction, the computer is enabled to perform the method in any one of the foregoing method embodiments.

An embodiment of this application further provides a computer-readable storage medium. The computer-readable storage medium stores a computer program. When the computer program is run, the method in any one of the foregoing method embodiments is implemented.

An embodiment of this application further provides a computer program product, for example, a computer-readable storage medium, including a program designed for performing the steps performed by the communication apparatus in the foregoing embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware assembly, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through illustrative but not limited description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or another programmable logic device, the discrete gate or the transistor logic device, or the discrete hardware assembly, the memory (the storage module) is integrated in the processor.

It should be noted that the memory described in this specification aims to include but is not limited to these memories and any memory of another proper type.

Method or algorithm steps described in combination with the content disclosed in this application may be implemented by hardware, or may be implemented by a processor by executing software instructions. The software instruction may be composed of a corresponding software module, and the software module may be stored in a random access memory (random access memory, RAM), a flash memory, a read only memory (read only memory, ROM), an erasable programmable ROM (erasable programmable ROM, EPROM), an electrically EPROM (electrically EPROM, EEPROM), a register, a hard disk, a removable hard disk, a CD-ROM, or any other form of storage medium well known in the art. For example, a storage medium is coupled to a processor, so that the processor can read information from the storage medium or write information into the storage medium. Certainly, the storage medium may be a component of the processor. The processor and the storage medium may be located in an application specific integrated circuit (application specific integrated circuit, ASIC).

In the several embodiments provided in this application, it should be understood that the disclosed system, apparatus, and method may be implemented in other manners. For example, the described apparatus embodiment is merely an example. For example, the division into the modules or units is merely logical function division and may be other division in actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technologies, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in embodiments of this application. The foregoing storage medium includes: any medium that can store program code, a USB flash drive, a removable hard disk, a read-only memory (read-only memory, ROM), a random access memory (random access memory, RAM), a magnetic disk, an optical disc, and the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, wherein the terminal device stores a first parameter, the first parameter is a parameter used by the terminal device in a first mode, and the method comprises:
failing, by the terminal device, in accessing a network device, or failing in registering with the network device, or being not capable of camping on a network of the network device; and
performing, by the terminal device, access to the network device in the first mode by using the first parameter.

2. The communication method according to claim 1, further comprising: sending, by the terminal device, first indication information to the network device, wherein the first indication information indicates the terminal device to perform access to the network device in the first mode.

3. The communication method according to claim 1 or 2, wherein the first parameter comprises at least one of the following parameters: a parameter related to performing uplink synchronization and downlink synchronization, a parameter related to access stratum, a parameter related to non-access stratum security, a parameter related to registration, and a parameter related to a data service, a voice service, or a short message service.

4. The communication method according to claim 3, wherein the parameter related to performing uplink synchronization and downlink synchronization comprises at least one of the following parameters: a configuration parameter related to cell selection, a configuration parameter of an initial bandwidth part initial BWP or an access frequency band resource, a parameter related to a control resource set 0, a configuration parameter used for search control of paging and random access, a configuration parameter of a physical downlink control channel PDCCH and a physical downlink shared channel PDSCH, a configuration parameter of a random access channel RACH resource, a configuration parameter of a physical uplink control channel PUCCH resource, a power control parameter, a time division duplex TDD ratio parameter, and a subcarrier spacing; and/or
the parameter related to the access stratum comprises at least one of the following parameters: a configuration parameter of a signaling radio bearer SRB and a data radio bearer DRB, a media access control MAC layer parameter, a radio link control RLC layer parameter, a packet data convergence protocol PDCP layer parameter, a service data adaptation protocol SDAP layer parameter, a radio resource control RRC layer parameter, a physical layer parameter, a logical channel configuration parameter, an RLC sequence number length, a PDCP sequence number length, a quality of service QoS parameter, and a security algorithm configuration parameter; and/or
the parameter related to the non-access stratum security comprises a security-related parameter, and the security-related parameter comprises: a security key set identifier and/or a security algorithm; and/or
the parameter related to performing registration comprises: a registration area identifier and/or a terminal identifier; and/or
the parameter related to performing the data service, the voice service, or the short message service comprises at least one of the following parameters: a rate of the data service, a rate of the voice service, a rate of the short message service, and a QoS parameter; and a resource of the data service, a resource of the voice service, and a resource of the short message service.

5. The communication method according to any one of claims 1 to 4, wherein the first parameter is continuously reserved when the terminal device communicates with the network device in a non-first mode.

6. The communication method according to any one of claims 1 to 5, wherein a rate of first data transmitted by the terminal device is less than or equal to a first rate threshold.

7. The communication method according to any one of claims 1 to 5, wherein when the first data transmitted by the terminal device is voice service data or short message service data, the rate of the first data is less than or equal to a second rate threshold; or
when the first data transmitted by the terminal device is non-voice service data or non-short message service data, the rate of the first data is less than or equal to a third rate threshold.

8. The communication method according to any one of claims 1 to 7, wherein a data volume of the first data transmitted by the terminal device is less than or equal to a first threshold; and/or a quantity of transmission times of the first data is less than or equal to a second threshold.

9. The communication method according to any one of claims 1 to 8, wherein a quantity of times that the terminal device enters the first mode is less than or equal to a first quantity threshold; or a quantity of times that the terminal device enters the first mode is less than or equal to a second quantity threshold; or a quantity of access times in the first mode that the terminal device performs service transmission is less than or equal to a third quantity threshold.

10. The communication method according to any one of claims 1 to 9, wherein the failing, by the terminal device, in accessing a network device comprises: the terminal device has no accessible first network, or a quantity of RRC connection setup failures of the terminal device reaches L, or a quantity of RRC connection reestablishment failures of the terminal device reaches M; and/or
the failing, by the terminal device, in registering with the network device comprises: a quantity of registration failures reaches N, wherein
L, M, and N are positive integers.

11. The communication method according to any one of claims 1 to 10, further comprising: sending, by the terminal device, second indication information, wherein the second indication information indicates to exit the first mode.

12. The communication method according to any one of claims 1 to 11, further comprising:
receiving, by the terminal device, system information of the network device, and exiting, by the terminal device, the first mode when the system information is correctly parsed; or
exiting, by the terminal device, the first mode if the terminal device reselects another network or another cell.

13. The communication method according to any one of claims 1 to 12, further comprising:
detecting, by the terminal device, whether the terminal device accesses the network device in a second mode, and exiting the first mode if the terminal device accesses the network device in the second mode, wherein the second mode is different from the first mode, or
receiving, by the terminal device, third indication information from the network device, wherein the third indication information indicates the terminal device to exit the first mode.

14. A communication method, applied to a network device, wherein the network device stores a first parameter, the first parameter is a parameter used by the network device in a first mode, and the method comprises:
receiving, by the network device, first indication information from a terminal device, wherein the first indication information indicates the terminal device to perform access to the network device in the first mode; and
communicating, by the network device, with the terminal device in the first mode by using the first parameter.

15. The communication method according to claim 14, wherein the first parameter comprises at least one of the following parameters: a parameter related to performing uplink synchronization and downlink synchronization, a parameter related to access stratum, a parameter related to non-access stratum security, a parameter related to registration, and a parameter related to a data service, a voice service, or a short message service.

16. The communication method according to claim 15, wherein the parameter related to performing uplink synchronization and downlink synchronization comprises at least one of the following parameters: a configuration parameter related to cell selection, a configuration parameter of an initial bandwidth part initial BWP or an access frequency band resource, a parameter related to a control resource set 0, a configuration parameter used for search control of paging and random access, a configuration parameter of a physical downlink control channel PDCCH and a physical downlink shared channel PDSCH, a configuration parameter of a random access channel RACH resource, a configuration parameter of a physical uplink control channel PUCCH resource, a power control parameter, a time division duplex TDD ratio parameter, and a subcarrier spacing; and/or
the parameter related to the access stratum comprises at least one of the following parameters: a configuration parameter of a signaling radio bearer SRB and a data radio bearer DRB, a media access control MAC layer parameter, a radio link control RLC layer parameter, a packet data convergence protocol PDCP layer parameter, a service data adaptation protocol SDAP layer parameter, a radio resource control RRC layer parameter, a physical layer parameter, a logical channel configuration parameter, an RLC sequence number length, a PDCP sequence number length, a quality of service QoS parameter, and a security algorithm configuration parameter; and/or
the parameter related to the non-access stratum security comprises a security-related parameter, and the security-related parameter comprises: a security key set identifier and/or a security algorithm; and/or
the parameter related to performing registration comprises: a registration area identifier and/or a terminal identifier; and/or
the parameter related to performing the data service, the voice service, or the short message service comprises at least one of the following parameters: a rate of the data service, a rate of the voice service, a rate of the short message service, and a QoS parameter; and a resource of the data service, a resource of the voice service, and a resource of the short message service.

17. The communication method according to any one of claims 14 to 16, further comprising: sending, by the network device, third indication information to the terminal device, wherein the third indication information indicates the terminal device to exit the first mode.

18. A communication apparatus, storing a first parameter, wherein the first parameter is a parameter used by the apparatus in a first mode, and the apparatus comprises a processing module, and
the processing module is configured to: control the apparatus to perform access to the network device in the first mode by using the first parameter when the apparatus fails in accessing a network device, or fails in registering with the network device, or is not capable of camping in a network of the network device.

19. The communication apparatus according to claim 18, further comprising a communication module, wherein
the communication module is configured to send first indication information to the network device, wherein the first indication information indicates the apparatus to perform access to the network device in the first mode.

20. The communication apparatus according to claim 18 or 19, wherein the first parameter comprises at least one of the following parameters: a parameter related to performing uplink synchronization and downlink synchronization, a parameter related to access stratum, a parameter related to non-access stratum security, a parameter related to registration, and a parameter related to a data service, a voice service, or a short message service.

21. The communication apparatus according to claim 20, wherein the parameter related to performing uplink synchronization and downlink synchronization comprises at least one of the following parameters: a configuration parameter related to cell selection, a configuration parameter of an initial bandwidth part initial BWP or an access frequency band resource, a parameter related to a control resource set 0, a configuration parameter used for search control of paging and random access, a configuration parameter of a physical downlink control channel PDCCH and a physical downlink shared channel PDSCH, a configuration parameter of a random access channel RACH resource, a configuration parameter of a physical uplink control channel PUCCH resource, a power control parameter, a time division duplex TDD ratio parameter, and a subcarrier spacing; and/or
the parameter related to the access stratum comprises at least one of the following parameters: a configuration parameter of a signaling radio bearer SRB and a data radio bearer DRB, a media access control MAC layer parameter, a radio link control RLC layer parameter, a packet data convergence protocol PDCP layer parameter, a service data adaptation protocol SDAP layer parameter, a radio resource control RRC layer parameter, a physical layer parameter, a logical channel configuration parameter, an RLC sequence number length, a PDCP sequence number length, a quality of service QoS parameter, and a security algorithm configuration parameter; and/or
the parameter related to the non-access stratum security comprises a security-related parameter, and the security-related parameter comprises: a security key set identifier and/or a security algorithm; and/or
the parameter related to performing registration comprises: a registration area identifier and/or a terminal identifier; and/or
the parameter related to performing the data service, the voice service, or the short message service comprises at least one of the following parameters: a rate of the data service, a rate of the voice service, a rate of the short message service, and a QoS parameter; and a resource of the data service, a resource of the voice service, and a resource of the short message service.

22. The communication apparatus according to any one of claims 18 to 21, wherein the first parameter is continuously reserved when the apparatus communicates with the network device in a non-first mode.

23. The communication apparatus according to any one of claims 18 to 22, wherein a rate of the first data transmitted by the apparatus is less than or equal to a first rate threshold.

24. The communication apparatus according to any one of claims 18 to 22, wherein when the first data transmitted by the apparatus is voice service data or short message service data, the rate of the first data is less than or equal to a second rate threshold; or
when the first data transmitted by the apparatus is non-voice service data or non-short message service data, the rate of the first data is less than or equal to a third rate threshold.

25. The communication apparatus according to any one of claims 18 to 24, wherein a data volume of first data transmitted by the apparatus is less than or equal to a first threshold, and/or a quantity of transmission times of the first data is less than or equal to a second threshold.

26. The communication apparatus according to any one of claims 18 to 25, wherein a quantity of times that the apparatus enters the first mode is less than or equal to a first quantity threshold; or a quantity of times that the apparatus enters the first mode is less than or equal to a second quantity threshold; or a quantity of access times in the first mode that the apparatus performs service transmission is less than or equal to a third quantity threshold.

27. The communication apparatus according to any one of claims 18 to 26, wherein the failure of the apparatus to access the network device comprises: there is no accessible first network, or a quantity of RRC connection setup failures reaches L, or a quantity of RRC connection reestablishment failures of the terminal device reaches M; and/or
the failing in registering with the network device comprises: a quantity of registration failures reaches N, wherein
L, M, and N are positive integers.

28. The communication apparatus according to any one of claims 18 to 27, wherein the communication module is further configured to send second indication information; and the second indication information indicates to exit the first mode.

29. The communication apparatus according to any one of claims 18 to 28, wherein
the communication module is further configured to receive system information of the network device;
the processing module is further configured to control the apparatus to exit the first mode when the system information is correctly parsed; or
the processing module is further configured to control the apparatus to exit the first mode if the apparatus reselects another network or another cell.

30. The communication apparatus according to any one of claims 18 to 29, wherein
the processing module is further configured to detect whether the network device is accessed in a second mode, and control the apparatus to exit the first mode; and if the network device is accessed in the second mode, and the second mode is different from the first mode, or
the communication module is further configured to receive third indication information from the network device, wherein the third indication information indicates the apparatus to exit the first mode.

31. A communication apparatus, storing a first parameter, wherein the first parameter is a parameter used by the apparatus in a first mode, and the apparatus comprises:
a communication module, configured to receive first indication information from a terminal device, wherein the first indication information indicates the terminal device to perform access to the apparatus in the first mode; and
a processing module, configured to control the apparatus to communicate with the terminal device in the first mode by using the first parameter.

32. The communication apparatus according to claim 31, wherein the first parameter comprises at least one of the following parameters: a parameter related to performing uplink synchronization and downlink synchronization, a parameter related to access stratum, a parameter related to non-access stratum security, a parameter related to registration, and a parameter related to a data service, a voice service, or a short message service.

33. The communication apparatus according to claim 32, wherein the parameter related to performing uplink synchronization and downlink synchronization comprises at least one of the following parameters: a configuration parameter related to cell selection, a configuration parameter of an initial bandwidth part initial BWP or an access frequency band resource, a parameter related to a control resource set 0, a configuration parameter used for search control of paging and random access, a configuration parameter of a physical downlink control channel PDCCH and a physical downlink shared channel PDSCH, a configuration parameter of a random access channel RACH resource, a configuration parameter of a physical uplink control channel PUCCH resource, a power control parameter, a time division duplex TDD ratio parameter, and a subcarrier spacing; and/or
the parameter related to the access stratum comprises at least one of the following parameters: a configuration parameter of a signaling radio bearer SRB and a data radio bearer DRB, a media access control MAC layer parameter, a radio link control RLC layer parameter, a packet data convergence protocol PDCP layer parameter, a service data adaptation protocol SDAP layer parameter, a radio resource control RRC layer parameter, a physical layer parameter, a logical channel configuration parameter, an RLC sequence number length, a PDCP sequence number length, a quality of service QoS parameter, and a security algorithm configuration parameter; and/or
the parameter related to the non-access stratum security comprises a security-related parameter, and the security-related parameter comprises: a security key set identifier and/or a security algorithm; and/or
the parameter related to performing registration comprises: a registration area identifier and/or a terminal identifier; and/or
the parameter related to performing the data service, the voice service, or the short message service comprises at least one of the following parameters: a rate of the data service, a rate of the voice service, a rate of the short message service, and a QoS parameter; and a resource of the data service, a resource of the voice service, and a resource of the short message service.

34. The communication apparatus according to any one of claims 31 to 33, wherein the communication module is further configured to send third indication information to the terminal device, wherein the third indication information indicates the terminal device to exit the first mode.

35. A communication system, comprising the communication apparatus according to any one of claims 18 to 30 and the communication apparatus according to any one of claims 31 to 34.

36. A communication apparatus, comprising a processor and a memory, wherein the processor is coupled to the memory; the memory is configured to store a computer program; and the processor is configured to execute the computer program stored in the memory, so that the communication apparatus performs the communication method according to any one of claims 1 to 13.

37. A communication apparatus, comprising a processor and a memory, wherein the processor is coupled to the memory; the memory is configured to store a computer program; and the processor is configured to execute the computer program stored in the memory, so that the communication apparatus performs the communication method according to any one of claims 14 to 17.

38. A computer-readable storage medium, comprising a computer program or instructions, wherein the computer program or the instructions are executed on a computer, the computer is enabled to perform the communication method according to any one of claims 1 to 13.

39. A computer-readable storage medium, comprising a computer program or instructions, wherein the computer program or the instructions is/are executed on a computer, the computer is enabled to perform the communication method according to any one of claims 14 to 17.
